(19) Europäisches Patentamt
European Patent Office
Office européen des brevets

(11) **EP 4 575 437 B1**

(12) **EUROPEAN PATENT SPECIFICATION**

(45) Date of publication and mention
of the grant of the patent:
**25.03.2026  Bulletin 2026/13**

(21) Application number: **23871309.3**

(22) Date of filing: **08.06.2023**

(51) International Patent Classification (IPC):
*G01L 5/00* (2006.01)        *G01N 3/20* (2006.01)

(52) Cooperative Patent Classification (CPC):
**G01L 5/0047; G01L 1/00; G01N 3/20; Y02P 10/20**

(86) International application number:
**PCT/JP2023/021384**

(87) International publication number:
**WO 2024/070064 (04.04.2024 Gazette 2024/14)**

(54) **RESIDUAL STRESS DISTRIBUTION CALCULATION METHOD, DEVICE AND PROGRAM**

VERFAHREN, VORRICHTUNG UND PROGRAMM ZUR BERECHNUNG DER RESTSPANNUNGSVERTEILUNG

PROCÉDÉ, DISPOSITIF ET PROGRAMME DE CALCUL DE RÉPARTITION DE CONTRAINTE RÉSIDUELLE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **29.09.2022   JP 2022155717**

(43) Date of publication of application:
**25.06.2025   Bulletin 2025/26**

(73) Proprietor: **JFE Steel Corporation**
**Tokyo 100-0011 (JP)**

(72) Inventors:
• **TAMASHIRO, Fumiaki**
**Tokyo 100-0011 (JP)**
• **ISHIWATARI, Akinobu**
**Tokyo 100-0011 (JP)**

(74) Representative: **Hoffmann Eitle**
**Patent- und Rechtsanwälte PartmbB**
**Arabellastraße 30**
**81925 München (DE)**

(56) References cited:
**WO-A1-2022/123825      WO-A1-2022/123825
CN-A- 111 964 817      CN-A- 114 491 812
JP-A- 2016 031 348      JP-B1- 5 582 211**

**Description**

Field

The present invention relates to a calculation method, a calculation device, and a calculation program of a residual stress distribution that calculates a residual stress distribution generated in a metal sheet subjected to plastic deformation.

Background

It is known that residual stress generated by a press-formed product (for example, a press-formed product for automobiles) manufactured by press forming of a metal sheet affects fatigue life or delayed fracture properties of the press-formed product. Therefore, it is important to grasp the residual stress generated in the press-formed product after press forming in order to guarantee the fatigue life and the like of products using the press-formed product.

In the related art, measurement of residual stress using X rays or supersonic waves, calculation of residual stress by measurement of strain in a deformation process of a metal sheet, estimation of residual stress by a finite element analysis of a press forming process, and the like are performed. As technology for measuring residual stress using X rays, for example, JP 2002-333409 A (hereinafter Patent Literature 1) discloses technology for detecting diffracted X rays emitted from a sample when the sample is irradiated with X rays and measuring stress inside the sample non-destructively based on information of the diffracted X rays. Meanwhile, as technology for measuring residual stress using supersonic waves, for example, JP 2011-196953 A (hereinafter Patent Literature 2) discloses technology of generating supersonic waves in a plastically deformed subject to be inspected (for example, a metal sheet or the like) and non-destructively measuring the residual stress based on sound speed information of the measured supersonic waves.

As technology for determining the residual stress generated in a press-formed product, for example, Japanese Patent No. 6981521

Non Patent Literature (hereinafter Patent Literature 3) discloses technology for calculating the residual stress after deformation by sequentially updating the stress from the start to the end of deformation in accordance with a strain history and a material constitutive law of a portion where the residual stress in a metal sheet is measured. In addition, as for estimation of the residual stress by the finite element analysis in the press forming process can be performed by generally widely used finite element analysis software, and in such finite element analysis, improvement of the accuracy of the material constitutive law is promoted. For example, the material constitutive law disclosed in F. Yoshida and T. Uemori, International Journal of Mechanical Sciences 45(2003) 1687-1702 (hereinafter Non-Patent Literature 1 and referred to as "Yoshida-Uemori model") contributes to higher accuracy of spring-back analysis which is important for estimation of residual stress of a press-formed product.

WO 2022/123825 A1 also forms part of the state of the art relative to the present disclosure.

45(2003) 1687-1702.

Summary

Technical Problem

However, the measurement of stress using X rays disclosed in Patent Literature 1 and the measurement of residual stress using supersonic waves disclosed in Patent Literature 2 are based on the premise that a sample (metal sheet or the like) is uniform in a region where X rays are incident or supersonic waves are generated. Therefore, it is difficult to accurately measure the residual stress of a metal sheet having two or more types of phases (for example, a dual phase (DP) steel sheet or the like) by these types of measurement technology. Moreover, the technology of Patent Literature 1 and Patent Literature 2 both measures the residual stress after deformation and cannot measure the stress history during deformation.

According to the technology disclosed in Patent Literature 3, since the stress is sequentially calculated in the process of calculating the residual stress using the strain history and the material constitutive law, it is possible to acquire the stress history during deformation. However, since local stress of a deformable portion is calculated, in a case of significant deformation or in a case where a metal sheet to be measured is itself subjected to rigid body motion or rigid body rotation, the coordinate system of the stress or strain is deviated from the coordinate system before the deformation. As a result, the direction in which the sequentially calculated stress is generated becomes unclear.

Furthermore, the technology of Patent Literatures 1 to 3 each determines stress at one specific point, and it is necessary to repeatedly measure the stress at a plurality of points in order to obtain the residual stress distribution.

In contrast to these types of technology, according to the method of estimating the residual stress by the finite element analysis, it is possible to easily calculate the residual stress distribution, which is one of the problems of the technology. However, input values (shape, material property, deformation property, boundary condition, and the like) given to finite element analysis software used for the finite element analysis greatly affects the estimation result of the residual stress. Therefore, in order to accurately estimate the residual stress by the finite element analysis, it is necessary to make various input values more accurate such as, not only the material property of the metal sheet, but also deformation property of a tool to which plastic deformation is applied or boundary conditions such as a contact condition and a sliding property between the metal sheet and the tool. Furthermore, in a case of shear deformation or the like accompanied with fracture of the metal sheet, it is necessary to incorporate conditions of the fracture into a finite element analysis model, and it is very difficult to estimate the residual stress with high accuracy.

The present invention has been made to solve the above problems, and an object of the present invention is to provide a calculation method, a calculation device, and a calculation program of a residual stress distribution that accurately and easily calculate a residual stress distribution generated in a metal sheet subjected to plastic deformation.

Solution to Problem

A calculation method of a residual stress distribution according to the present invention calculates a distribution of residual stress generated in a metal sheet subjected to plastic deformation, and includes: a deformation history acquiring step; a sequential stress updating step; and a residual stress distribution calculating step, wherein the deformation history acquiring step includes: a surface deformation history acquiring step of setting a plurality of measurement points on a surface of a deformable portion of the metal sheet and measuring three-dimensional coordinates of each of the measurement points in a deformation process of plastically deforming the metal sheet to acquire a deformation history on the surface from a start to an end of deformation of the deformable portion; a strain history acquiring step of acquiring a strain history of the deformable portion in the deformation process from the acquired deformation history on the surface of the deformable portion; and a spin history acquiring step of acquiring a spin history of the deformable portion in the deformation process from the acquired deformation history on the surface of the deformable portion, the sequential stress updating step includes: an acquired incremental strain calculating step of calculating acquired incremental strain from the strain history acquired in the strain history acquiring step; an assumptive incremental strain calculating step of calculating an assumptive incremental strain by presuming a deformation state of the deformable portion, the assumptive incremental strain being an increment of strain other than strain for which the strain history has been acquired in the strain history acquiring step; an acquired incremental spin calculating step of calculating an acquired incremental spin from the spin history acquired in the spin history acquiring step; an incremental stress calculating step of calculating incremental stress at each of the measurement points in accordance with a material constitutive law using the acquired incremental strain, the assumptive incremental strain, and the acquired incremental spin; and a sequential stress updating step of sequentially updating stress in a material coordinate system of each of the measurement points from the start to the end of deformation in the deformation process using the incremental stress calculated for each of the measurement points, and the residual stress distribution calculating step includes: a stress coordinate system converting step of converting the stress in the material coordinate system of each of the measurement points at the end of deformation in the deformation process obtained by sequential update in the sequential stress updating step into a global stress value in a predetermined direction in a global coordinate system and obtaining the converted global stress value of each of the measurement points as a residual stress distribution of the deformable portion.

The residual stress distribution calculating step may further include a residual stress distribution display step of displaying the residual stress distribution of the deformable portion obtained in the stress coordinate system converting step.

The assumptive incremental strain calculating step may presume a deformation state from the deformation process of the deformable portion and calculates the assumptive incremental strain based on mechanics of plasticity in the deformation state that is presumed.

The assumptive incremental strain calculating step may presume a deformation state of the deformable portion by a finite element analysis of the deformation process of the metal sheet and calculates the assumptive incremental strain based on the deformation state that is presumed.

A calculation device of a residual stress distribution according to the present invention calculates a distribution of residual stress generated in a metal sheet subjected to plastic deformation, and includes: a deformation history acquiring unit; a sequential stress updating unit; and a residual stress distribution calculating unit, wherein the deformation history acquiring unit includes: a surface deformation history acquiring unit configured to acquire, as a deformation history on a surface from a start to an end of deformation of a deformable portion, three-dimensional coordinates measured in a deformation process of plastically deforming the metal sheet, the three-dimensional coordinates measured for a plurality of measurement points set to the deformable portion of the metal sheet; a strain history acquiring unit configured to acquire a strain history of the deformable portion in the deformation process from the acquired deformation history on the surface of the deformable portion; and a spin history acquiring unit configured to acquire a spin history of the deformable portion in the deformation process from the acquired deformation history on the surface of the deformable portion, the sequential stress updating unit includes: an acquired incremental strain calculating unit configured to calculate acquired incremental strain from the strain history acquired by the strain history acquiring unit; an assumptive incremental strain calculating unit configured to calculate an assumptive incremental strain by presuming a deformation state of the deformable portion, the assumptive incremental strain being an increment of strain other than strain for which the strain history has been acquired by the strain history acquiring unit; an acquired incremental spin calculating unit configured to calculate an acquired incremental spin from the spin history acquired by the spin history acquiring unit; an incremental stress calculating unit configured to calculate incremental stress at each of the measurement points in accordance with a material constitutive law using the acquired incremental strain, the assumptive incremental strain, and the acquired incremental spin; and a sequential stress updating unit configured to sequentially update stress in a material coordinate system of each of the measurement points from the start to the end of deformation in the deformation process using the incremental stress calculated for each of the measurement points, and the residual stress distribution calculating unit includes: a stress coordinate system converting unit configured to convert the stress in the material coordinate system of each of the measurement points at the end of deformation in the deformation process obtained by sequential update by the sequential stress updating unit into a global stress value in a predetermined direction in a global coordinate system and obtains the converted global stress value of each of the measurement points as a residual stress distribution of the deformable portion.

The residual stress distribution calculating unit may further include a residual stress distribution displaying unit configured to display the residual stress distribution of the deformable portion obtained by the stress coordinate system converting unit.

The assumptive incremental strain calculating unit may be configured to presume a deformation state from the deformation process of the deformable portion and calculate the assumptive incremental strain based on mechanics of plasticity in the deformation state that is presumed.

The assumptive incremental strain calculating unit may be configured to presume a deformation state of the deformable portion by a finite element analysis of the deformation process of the metal sheet and calculate the assumptive incremental strain based on the deformation state that is presumed.

A calculation program of a residual stress distribution according to the present invention calculates a distribution of residual stress generated in a metal sheet subjected to plastic deformation, and causes a computer to function as: a deformation history acquiring unit, a sequential stress updating unit, and a residual stress distribution calculating unit, wherein the deformation history acquiring unit includes: a surface deformation history acquiring unit configured to acquire, as a deformation history on a surface from a start to an end of deformation of a deformable portion, three-dimensional coordinates measured in a deformation process of plastically deforming the metal sheet, the three-dimensional coordinates measured for a plurality of measurement points set to the deformable portion of the metal sheet; a strain history acquiring unit configured to acquire a strain history of the deformable portion in the deformation process from the acquired deformation history on the surface of the deformable portion; and a spin history acquiring unit configured to acquire a spin history of the deformable portion in the deformation process from the acquired deformation history on the surface of the deformable portion, the sequential stress updating unit includes: an acquired incremental strain calculating unit configured to calculate acquired incremental strain from the strain history acquired by the strain history acquiring unit; an assumptive incremental strain calculating unit configured to calculate an assumptive incremental strain by presuming a deformation state of the deformable portion, the assumptive incremental strain being an increment of strain other than strain for which the strain history has been acquired by the strain history acquiring unit; an acquired incremental spin calculating unit configured to calculate an acquired incremental spin from the spin history acquired by the spin history acquiring unit; an incremental stress calculating unit configured to calculate incremental stress at each of the measurement points in accordance with a material constitutive law using the acquired incremental strain, the assumptive incremental strain, and the acquired incremental spin; and a sequential stress updating unit configured to sequentially update stress in a material coordinate system of each of the measurement points from the start to the end of deformation in the deformation process using the incremental stress calculated for each of the measurement points, and the residual stress distribution calculating unit includes: a stress coordinate system converting unit configured to convert the stress in the material coordinate system of each of the measurement points at the end of deformation in the deformation process obtained by sequential update by the sequential stress updating unit into a global stress value in a predetermined direction in a global coordinate system and obtains the converted global stress value of each of the measurement points as a residual stress distribution of the deformable portion.

The residual stress distribution calculating unit may further include a residual stress distribution displaying unit configured to display the residual stress distribution of the deformable portion obtained by the stress coordinate system converting unit.

The assumptive incremental strain calculating unit may be configured to presume a deformation state from the deformation process of the deformable portion and calculate the assumptive incremental strain based on mechanics of plasticity in the deformation state that is presumed.

The assumptive incremental strain calculating unit may be configured to presume a deformation state of the deformable portion by a finite element analysis of the deformation process of the metal sheet and calculate the assumptive incremental strain based on the deformation state that is presumed.

Advantageous Effects of Invention

According to the present invention, even in a case where the directions of the material coordinate system of a deformable portion of the metal sheet subjected to plastic deformation change, it is possible to obtain the residual stress distribution having high accuracy in the deformable portion by aligning directions of the stress. Furthermore, according to the present invention, it is possible to acquire a history of the highly accurate stress distribution during deformation. Furthermore, according to the present invention, it is possible to accurately and easily calculate the residual stress distribution generated in the metal sheet even in a case of shear deformation or the like accompanied by fracture of the metal sheet, which is difficult to estimate by the finite element method.

Brief Description of Drawings

FIG. 1 is a flowchart illustrating a flow of processing in a calculation method of a residual stress distribution according to an embodiment of the present invention.
FIG. 2 is a diagram explaining changes in directions of a material coordinate system and a global coordinate system before and after bending deformation of a metal sheet ((a) Before deformation and (b) After deformation).
FIG. 3 is a diagram for explaining a configuration of a calculation device of a residual stress distribution according to the embodiment.
FIG. 4 is a diagram for explaining a deformation history on the surface at each measurement point and strain and spin generated in a region including the three measurement points from three-dimensional coordinates before and after deformation measured for the three measurement points in the calculation method of the residual stress distribution according to the present embodiment ((a) Before deformation and (b) After deformation).
FIG. 5 is a diagram illustrating the shape of a metal sheet to be tested in Examples.
FIG. 6 is a graph illustrating results of calculating residual stress distributions in a tensile direction generated at deformable portions of the metal sheet subjected to uniaxial tensile deformation in Examples.
FIG. 7 is a contour plot illustrating a result of obtaining a residual stress distribution in a tensile direction generated at deformable portions of the metal sheet subjected to uniaxial tensile deformation by a method according to the present invention as an inventive example in Examples.
FIG. 8 is a contour plot illustrating a result of obtaining a residual stress distribution in a tensile direction generated at deformable portions of the metal sheet subjected to uniaxial tensile deformation by the finite element analysis as a comparative example in Examples.
FIG. 9 is a graph illustrating a result of obtaining residual stress in a tensile direction generated at measurement points A to D of deformable portions of the metal sheet subjected to uniaxial tensile deformation as the inventive example and the comparative example in Examples.

Description of Embodiments

Prior to describing the calculation method, the calculation device, and the calculation program of a residual stress distribution that calculates a residual stress distribution according to the embodiment of the present invention, the background of the present invention will be described.

<Background of present invention>

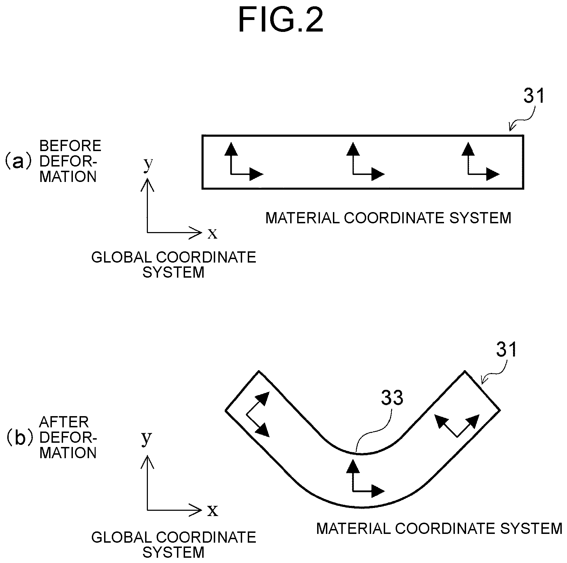

In the method disclosed in Patent Literature 3 described above, the residual stress generated in the metal sheet subjected to plastic deformation is calculated based on a coordinate system defined at each position of the metal sheet. For this reason, when the directions of the coordinate system change due to rotational deformation of the metal sheet itself in the middle of the deformation process, the generation direction of the residual stress becomes unclear.
As an example in which the directions of the material coordinate system of the metal sheet subjected to plastic deformation change, a metal sheet 31 that undergoes bending deformation as illustrated in FIG. 2 will be studied. In FIG. 2, (a) is a diagram illustrating the metal sheet 31 before bending deformation, and (b) is a diagram illustrating the metal sheet 31 after bending deformation. A coordinate system defined at each position of the metal sheet 31 is referred to as a material coordinate system. On the other hand, a coordinate system when the deformed metal sheet 31 is viewed from the outside is referred to as a global coordinate system.
In the metal sheet 31 before bending deformation, as illustrated in FIG. 2(a), the directions of the material coordinate system are constant regardless of the position in the metal sheet 31 and coincide with the directions of the global coordinate system. On the other hand, in the metal sheet 31 after bending deformation, as illustrated in FIG. 2(b), the directions of the material coordinate system vary depending on the difference in position in the metal sheet 31 and deviate from the directions of the global coordinate system.

That is, in the material coordinate system, the directions of the coordinate system change as the metal sheet 31 is deformed, and the directions of the coordinate system vary depending on the difference in position in the metal sheet 31. On the other hand, unlike the material coordinate system, the global coordinate system is constant regardless of the position in the metal sheet 31 without changing the directions regardless of the deformation of the metal sheet 31.

In order to calculate the distribution of the residual stress at a deformable portion of the metal sheet, it is necessary to calculate the residual stress at a plurality of positions in the metal sheet. However, the residual stress calculated by the method disclosed in Patent Literature 3 follows a material coordinate system at a position where the stress is calculated. For this reason, in the case of calculating the residual stress at a plurality of positions, the direction of the residual stress varies depending on the position, and thus, there is a possibility that the residual stress varies and is uneven.

In order to align the direction of the residual stress, it is conceivable that it suffices to align the direction of the residual stress based on the directions of the material coordinate system at each position at which the residual stress has been calculated. However, in the method disclosed in Patent Literature 3, the stress in the deformation process is sequentially calculated using only the strain history. Therefore, it is not possible to know in which direction the metal sheet changes in the deformation process or to obtain information about the directions of the material coordinate system for each position where the stress is calculated.

Therefore, the inventors have intensively studied to solve such a problem. As a result, the inventors conceived of acquiring not only the strain history in the deformation process of the metal sheet but also a history of rotation (hereinafter referred to as "spin") of the material coordinate system at a plurality of positions. Then, the history of the spin is acquired as information regarding the directions of the material coordinate system with respect to the global coordinate system that is sequentially updated in the deformation process at each position of the metal sheet. It is further found that the directions of residual stress at a plurality of positions are aligned to obtain a distribution thereof by converting the residual stress calculated in accordance with the material coordinate system at each position of the metal sheet into stress in a predetermined direction in the global coordinate system based on the acquired spin.

The present invention has been made based on the results of the above study and, specifically, has the following configuration.

<Calculation method of residual stress distribution>

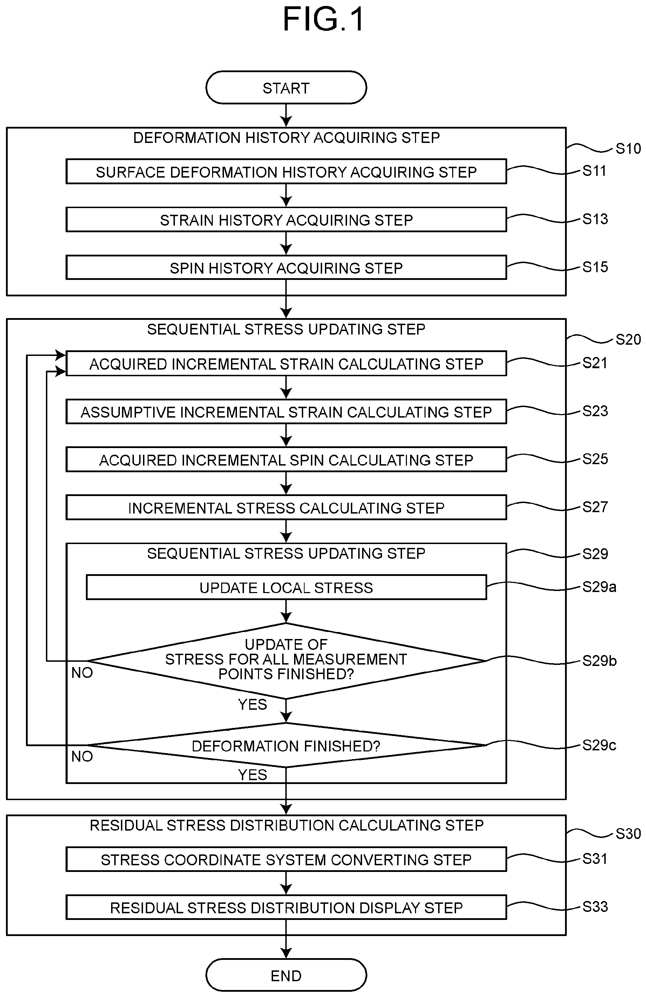

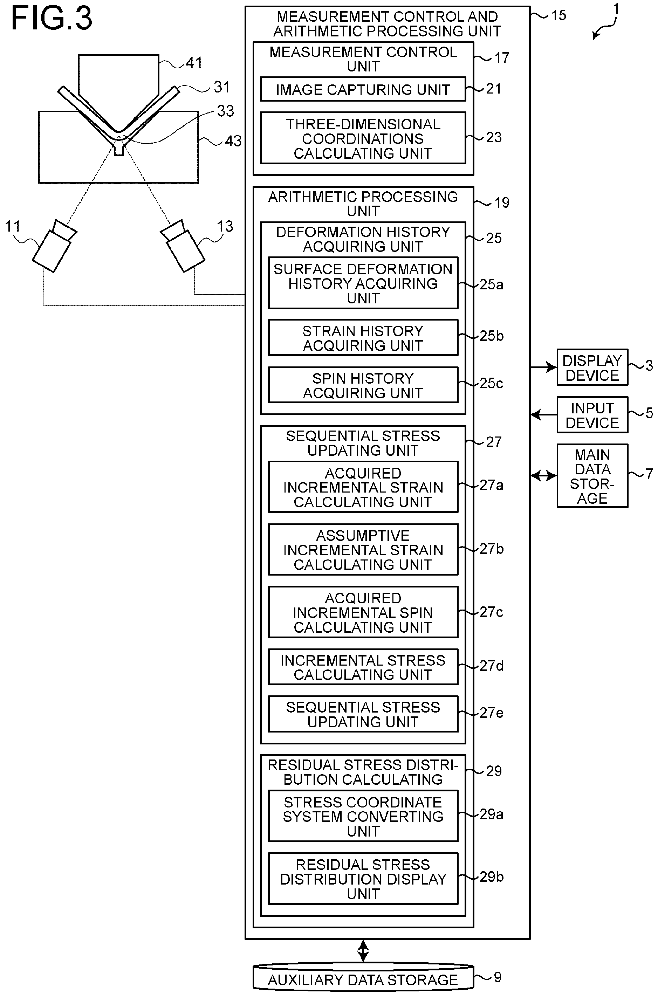

The calculation method of the residual stress distribution according to the embodiment of the present invention calculates the distribution of the residual stress generated in a metal sheet subjected to plastic deformation. As illustrated in FIG. 1, the calculation method of the residual stress distribution according to the present embodiment includes a deformation history acquiring step S10, a sequential stress updating step S20, and a residual stress distribution calculating step S30. Hereinafter, as exemplified in FIG. 3, each of the above steps will be described for a case of calculating the distribution of residual stress generated in a deformable portion 33 of the metal sheet 31 subjected to bending deformation using a punch 41 and a die 43.

<<Deformation history acquiring step>>

The deformation history acquiring step S10 is a step of acquiring a deformation history on the surface of the deformable portion 33 of the metal sheet 31 in a deformation process of plastically deforming the metal sheet 31, and acquiring a strain history and a spin history generated in the deformable portion 33 from the acquired deformation history on the surface. As illustrated in FIG. 1, the deformation history acquiring step S10 includes a surface deformation history acquiring step S11, a strain history acquiring step S13, and a spin history acquiring step S15.

(Surface deformation history acquiring step)

First, in the surface deformation history acquiring step S11, a plurality of measurement points are set on the surface of the deformable portion 33 of the metal sheet 31. Then, by measuring three-dimensional coordinates of each of the measurement points in a deformation process of plastically deforming the metal sheet 31, a deformation history on the surface from the start of deformation to the end of deformation of the deformable portion 33 is acquired.

In the present embodiment, as illustrated in FIG. 3, two cameras 11 and 13 are installed at positions where the surface of the deformable portion 33 of the metal sheet 31 can be photographed. Then, the three-dimensional coordinates of the respective measurement points are measured by digital image correlation (hereinafter referred to as "DIC").

In the DIC, the surface of the deformable portion 33 in the deformation process of the metal sheet 31 is photographed at predetermined time intervals using the camera 11 and the camera 13, and an image captured at each time step (hereinafter, referred to as "DIC image") is subjected to image analysis. This makes it possible to measure the three-dimensional coordinates of the respective measurement points at each time step from the start of deformation to the end of deformation.

(Strain history acquiring step)

Next, in the strain history acquiring step S13, a strain history of the deformable portion 33 in the deformation process is acquired from the deformation history on the surface of the deformable portion 33 acquired in the surface deformation history acquiring step S11.

(Spin history acquiring step)

Next, in the spin history acquiring step S15, a spin history of the deformable portion 33 in the deformation process is acquired from the deformation history on the surface of the deformable portion 33 acquired in the surface deformation history acquiring step S11.

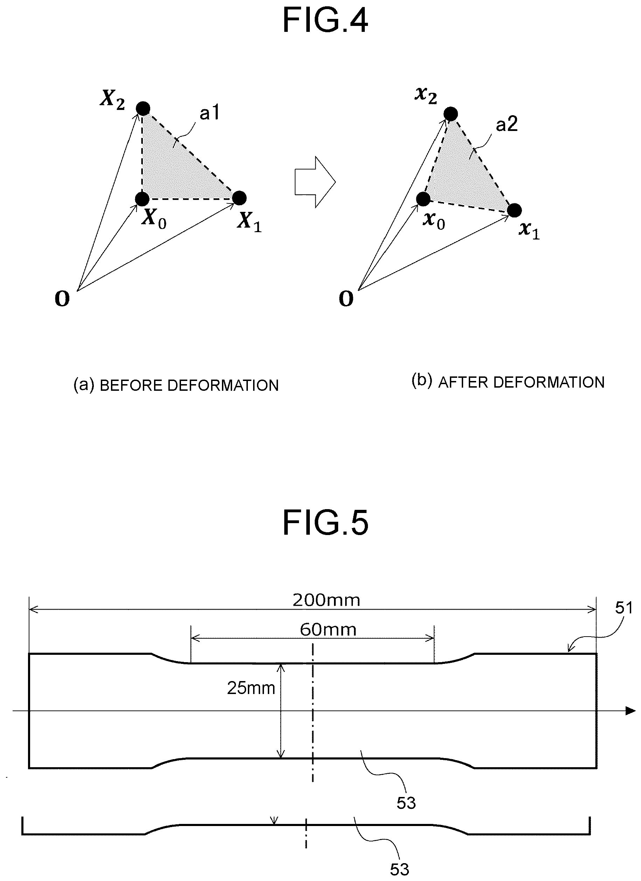

A specific process in the deformation history acquiring step S10 will be described by way of example with a case where three measurement points are set in the deformable portion 33 of the metal sheet 31 as illustrated in FIG. 4.

First, as illustrated in FIG. 4, a plurality of measurement points is set in the deformable portion 33 of the metal sheet 31, and three-dimensional coordinates of each of the measurement points are measured at predetermined time intervals in a deformation process.

In FIG. 4, coordinates of each of the measurement points at a certain time step in the deformation process are denoted as coordinates $X_i$ before deformation, and coordinates of each of the measurement points at a time step after a predetermined time interval has elapsed from the time step are denoted as coordinates $x_i$ after deformation (i = 0, 1, 2).

Then, in a case where a region a1 formed by the three measurement points in the time step before deformation is deformed into a region a2 in the time step after deformation, strain and a spin caused by deformation of the region formed by the three measurement points can be calculated as follows.

Measurement points of coordinates $X_0$ and $x_0$ are used as references for the region a1 before deformation and the region a2 after deformation, respectively.

Furthermore, relative positions of the measurement points of the coordinates $X_i$ and $x_i$ (i = 1, 2) from the reference point ($X_0$ or $x_0$) are expressed as $dX_i = X_i - X_0$ (i = 1, 2) and $dx_i = x_i - x_0$ (i = 1, 2), respectively. In this case, F satisfying $dx_i = FdX_i$ is called a deformation gradient tensor.

In general, deformation of the region formed by the plurality of measurement points does not need to be obtained from displacements of the above three measurement points but can be expressed by the following Equation (1).

$$dx = FdX \qquad \cdots (1)$$

*where*

$$dX = (dX_1 \, dX_2 \cdots), dx = (dx_1 \, dx_2 \cdots)$$

When Equation (1) is solved for the deformation gradient tensor F, Equation (2) is obtained.

$$F = dx dX^T (dX dX^T)^{-1} \qquad \cdots (2)$$

Furthermore, using the deformation gradient tensor F, the right Cauchy-Green deformation tensor C and the right stretch tensor U are expressed by Equations (3) and (4), respectively.

$$C = F^T \cdot F \qquad \cdots (3)$$

$$U = C^{\frac{1}{2}} \qquad \cdots (4)$$

Using these, a logarithmic strain tensor (Hencky strain tensor) E and a spin tensor R are defined by Equations (5) and (6), respectively.

$$E = \frac{1}{2}\ln(C) \qquad \cdots (5)$$

$$R = F \cdot U^{-1} \qquad \cdots (6)$$

In Equation (5), the Hencky strain tensor E is strain at each time step from the start of deformation to the end of deformation. Furthermore, in Equation (6), the spin tensor R is a spin at each time step from the start of deformation to the end of deformation.

As described above, in the acquisition of the deformation history by DIC, first, the surface of the deformable portion 33 of the metal sheet 31 in the deformation process is photographed at predetermined time intervals. Next, the image of DIC images captured at respective time steps are analyzed, and three-dimensional coordinates $(X_i, x_i)$ of each of the measurement points set in the deformable portion 33 are measured. Subsequently, the Hencky strain tensor E and the spin tensor R at a predetermined position of the deformable portion 33 are calculated from the measured three-dimensional coordinates of each of the measurement points (Equations (1) to (6)).

Then, the Hencky strain tensor E calculated at each time step from the start of deformation to the end of deformation is acquired as the strain history (S13). Similarly, the spin tensor R calculated at each time step from the start of deformation to the end of deformation is acquired as the spin history (S13).

<<Sequential stress updating step>>

The sequential stress updating step S20 is a step of sequentially updating the stress in the material coordinate system of each of the measurement points (hereinafter, the stress is also referred to as "local stress") set in the deformable portion 33 of the metal sheet 31 from the start to the end of deformation in the deformation process. As illustrated in FIG. 1, the sequential stress updating step S20 includes an acquired incremental strain calculating step S21, an assumptive incremental strain calculating step S23, an acquired incremental spin calculating step S25, an incremental stress calculating step S27, and a sequential stress updating step S29.

(Acquired incremental strain calculating step)

First, in the acquired incremental strain calculating step S21, an acquired incremental strain is calculated from the strain history acquired in the strain history acquiring step S13.

The acquired incremental strain is an increment of strain obtained by acquiring the strain history in the strain history acquiring step S13. In a case where the three-dimensional coordinates in the deformation process of each of the measurement points set in the deformable portion 33 in the surface deformation history acquiring step S11 are acquired as the deformation history on the surface, the strain history acquired in the strain history acquiring step S13 is strain in two in-plane directions and in-plane shear strain. Therefore, the acquired incremental strain calculated in the acquired incremental strain calculating step S21 is incremental strain of both the strain in the two in-plane directions and the in-plane shear strain.

The acquired incremental strain is further calculated for each time step in which the strain history is acquired. The acquired incremental strain at each time step can be calculated from, for example, the strain at the concerned time step and the strain at preceding and following time steps.

(Assumptive incremental strain calculating step)

Next, in the assumptive incremental strain calculating step S23, assumptive incremental strain is calculated. The assumptive incremental strain is incremental strain for each time step of strain other than the strain for which the strain history has been acquired in the strain history acquiring step S13. The strain other than the strain for which the strain history has been acquired can be obtained by presuming a deformation state from the deformation process of the deformable portion 33 and by being based on the mechanics of plasticity in the presumed deformation state.

As described above, in the strain history acquiring step S13, three-component strain containing strain $\varepsilon_x$ and $\varepsilon_y$ in two in-plane directions (x direction and y direction) and in-plane (x-y plane) shear strain $\varepsilon_{xy}$ of the surface of the deformable portion 33 are calculated.

However, in the deformable portion 33 of the metal sheet 31, not only the strain components in the in-plane direction but also strain of six components ($\varepsilon_x$, $\varepsilon_y$, $\varepsilon_z$, $\varepsilon_{xy}$, $\varepsilon_{yz}$, and $\varepsilon_{zx}$) including strain components in the out-of-plane direction (z direction) are generated.

In general, the surface of the metal sheet 31 in the deformation process is a free surface, and thus no stress is generated in a direction perpendicular to the surface of the metal sheet 31. That is, the deformation state of the deformable portion 33 of the metal sheet 31 can be presumed to be a plane stress state.

Then, based on the mechanics of plasticity in the presumed deformation state, an equation for giving incremental stress in the out-of-plane direction is obtained from the strain ($\varepsilon_x$, $\varepsilon_y$, and $\varepsilon_{xy}$) acquired from the deformation history on the surface acquired by DIC and the strain ($\varepsilon_z$, $\varepsilon_{yz}$, and $\varepsilon_{zx}$) including an unknown out-of-plane direction.

Presuming that the deformation state of the deformable portion 33 is a plane stress state, incremental stress in the out-of-plane direction is 0, and thus the strain ($\varepsilon_z$) in the out-of-plane direction can be uniquely calculated using the strain and the equation of the incremental stress based on the mechanics of plasticity.

That is, the deformation state of the deformable portion 33 is presumed from the deformation process of the metal sheet 31, and the strain other than the strain for which the strain history has been acquired in the strain history acquiring step S13 can be obtained based on the mechanics of plasticity in the presumed deformation state.

As described above, in the assumptive incremental strain calculating step S23, the strain other than the strain for which the strain history is acquired at each time step in the deformation process is calculated by presuming the deformation state of the deformable portion. Then, similarly to the acquired incremental strain described above, the assumptive incremental strain is calculated from the strain (assumptive strain) calculated presuming the deformation state of the deformable portion at each time step in the deformation process. Similarly to the acquired incremental strain described above, the assumptive incremental strain at each time step can be calculated from the strain obtained at the time step and the preceding and following time steps.

The assumptive incremental strain calculating step S23 is not limited to the calculation from the strain obtained presuming the deformation state as described above but also includes a case of giving a value of the assumptive incremental strain based on another presumed deformation state.

(Acquired incremental spin calculating step)

Subsequently, in the acquired incremental spin calculating step S25, the acquired incremental spin is calculated from the spin history acquired in the spin history acquiring step S15. The acquired incremental spin is an increment of spin for each time step of the deformable portion 33 acquired at a predetermined time interval. The acquired incremental spin at each time step can be calculated from, for example, the spin at the time step and the spins at preceding and following time steps.

(Incremental stress calculating step)

Subsequently, in the incremental stress calculating step S27, the incremental stress of the deformable portion 33 in the deformation process is calculated using the acquired incremental strain, the assumptive incremental strain, and the acquired incremental spin.

The material constitutive law based on elastoplastic mechanics can be used to calculate the incremental stress. In this case, the incremental stress in the material coordinate system is expressed by the relationship expressed in Equation (7) by the incremental strain (the acquired incremental strain and the assumptive incremental strain) and the incremental spin.

$$\dot{\boldsymbol{\sigma}} = \boldsymbol{C}^{ep} : \boldsymbol{D} + \boldsymbol{W} \cdot \boldsymbol{\sigma} - \boldsymbol{\sigma} \cdot \boldsymbol{W} \qquad \cdots (7)$$

where, $\sigma$: stress tensor

$\dot{\sigma}$: incremental stress tensor

$\boldsymbol{C}^{ep}$: elastic - plastic tangent modulus tensor

$\boldsymbol{D}$: incremental strain tensor

$\boldsymbol{W}$: incremental spin tensor

In Equation (7), the incremental strain tensor D is an increment of the strain tensor E in one time step, and the incremental spin tensor W is an increment of the spin tensor R in one time step.

Furthermore, the elastic-plastic tangent modulus tensor $C^{ep}$ in Equation (7) can be given by Equation (8).

$$C^{ep} = C^e - \frac{(C^e : r) \otimes \left(\frac{\partial f}{\partial \sigma} : C^e\right)}{-\frac{\partial f}{\partial q} \cdot h + \frac{\partial f}{\partial \sigma} : C^e : r} \qquad \cdots (8)$$

where,

$C^e$: elastic tangent modulus tensor
$f$: yield function
$r$: internal plastic strain tensor
$q$: internal variable tensor

(equivalent plastic strain,
back stress tensor or the like)

$h$: function representing($\dot{q} = \dot{\lambda} h(\sigma, q)$)
increment of internal variable tensor
$\dot{\lambda}$: plastic tangent modulus

In the present embodiment, as an example of the material constitutive law, the incremental stress is calculated from the incremental strain (the acquired incremental strain and the assumptive incremental strain) based on on the Yoshida-Uemori model disclosed in Non-Patent Literature 1 capable of reproducing the Bauschinger effect with high accuracy.

The Yoshida-Uemori model can be classified into a two-surface model in which a yield surface moves within a bounding surface, and development of the bounding surface (center of β and radius of R) and the yield surface (center of α and radius of Y) is defined by the following Equations (9) by the incremental strain.

$$\alpha^* = \alpha - \beta$$

$$\dot{\alpha}^* = C\left\{\left(\frac{a}{Y}\right)(\sigma - \alpha) - \sqrt{\frac{a}{a^*}}\alpha^*\right\}\dot{\varepsilon}$$

$$\dot{\beta} = m\left\{\left(\frac{b}{Y}\right)(\sigma - \alpha) - \beta\right\}\dot{\varepsilon} \qquad \cdots (9)$$

$$\dot{R} = m(R_{sat} - R)\dot{\varepsilon}$$

$$a = a_0 + R$$

where, Y, $a_0$, C, b, m, and $R_{sat}$ are material constants

In this case, Equation (8) is expressed by Equation (10).

$$C^{ep} = C^e - \frac{\left(C^e : \frac{\partial f}{\partial \sigma}\right) \otimes \left(\frac{\partial f}{\partial \sigma} : C^e\right)}{\frac{\partial f}{\partial \sigma} \cdot \left[C\left\{\left(\frac{a}{Y}\right)(\sigma - a) - \sqrt{\frac{a}{a^*}}\alpha^*\right\} + m\left\{\left(\frac{a}{Y}\right)(\sigma - a) - \beta\right\}\right] + \frac{\partial f}{\partial \sigma} : C^e : \frac{\partial f}{\partial \sigma}}$$

$$\cdots (10)$$

In this manner, in a case where the incremental strain and the incremental spin are clear, the incremental stress is obtained in accordance with the material constitutive law.

The material constitutive law is not limited to the Yoshida-Uemori model described above, and the elastic-plastic tangent modulus tensor may be calculated according to any material constitutive law. For example, in a case where a material constitutive law presuming isotropic hardening is used instead of the Yoshida-Uemori model, the elastic-plastic tangent modulus tensor $C^{ep}$ is expressed by Equation (11).

$$C^{ep} = C^e - \frac{\left(C^e : \frac{\partial f}{\partial \boldsymbol{\sigma}}\right) \otimes \left(\frac{\partial f}{\partial \boldsymbol{\sigma}} : C^e\right)}{H' + \frac{\partial f}{\partial \boldsymbol{\sigma}} : C^e : \frac{\partial f}{\partial \boldsymbol{\sigma}}} \qquad \cdots (11)$$

where, $H' = \dfrac{\partial H}{\partial \overline{\varepsilon^p}}$ , H is a function representing($\overline{\sigma} = H(\overline{\varepsilon^p})$)
the relationship between equivalent stress $\overline{\sigma}$ and
an equivalent plastic strain $\overline{\varepsilon^p}$ in
a uniaxial tensile test

In addition, as a yield function f used to give the elastic-plastic tangent modulus tensor $C^{ep}$, not only a yield function of von Mises that is isotropic but also any yield function such as Hill'48 or Yld2000-2d that can express anisotropy of a material (metal sheet) with high accuracy can be used.

(Sequential stress updating step)

Subsequently, in the sequential stress updating step S29, stress in a material coordinate system of each of the measurement points is sequentially updated from the start to the end of deformation in the deformation process using the incremental stress calculated for each of the measurement points.

In the sequential stress updating step S29, first, in a certain time step in the deformation process, the local stress is updated using the incremental stress calculated for each of the measurement points (S29a). Then, it is determined whether or not the local stress has been updated for all the measurement points (S29b).

If it is determined that the local stress has not been updated for all the measurement points (S29b), as illustrated in FIG. 1, each piece of processing of S21, S23, S25, and S27 described above is executed for the concerned measurement point, and the local stress is updated (S29a).

In a case where it is determined that the local stress has been updated for all the measurement points (S29b), it is determined whether or not the deformation of the metal sheet has ended, namely, whether or not there is a next time step before the end of deformation of the metal sheet (S29c).

If it is determined that the deformation is not ended, the process proceeds to the next time step of the deformation process. Then, for all the measurement points, the calculation of the acquired incremental strain (S21), the calculation of the assumptive incremental strain (S23), the calculation of the acquired incremental spin (S25), the calculation of the incremental stress (S27), the update of the local stress (S29a), and the determination of the stress update (S29b) are executed. As described above, in the sequential stress updating step S29, the local stresses at all the measurement points from the start of deformation to the end of deformation are sequentially updated by performing the processing of S29a to S29c.

<<Residual stress distribution calculating step>>

The residual stress distribution calculating step S30 is a step of converting the local stress at each of the measurement points at the end of deformation into a global stress value in the global coordinate system and calculating a residual stress distribution. In the present embodiment, the residual stress distribution calculating step S30 includes a stress coordinate system converting step S31 and a residual stress distribution display step S33.

(Stress coordinate system converting step)

First, in the stress coordinate system converting step S31, among the pieces of local stress at the respective measurement points sequentially updated from the start of deformation to the end of deformation in the sequential stress updating step S20, the local stress at the end of deformation is converted into a stress value (global stress value) in a predetermined direction in the global coordinate system. Then, in the stress coordinate system converting step S31, the converted global stress values at the respective measurement points are obtained as the residual stress distribution of the deformable portion.

Let the local stress obtained for each of the measurement points be $\sigma$ and a predetermined direction in the global coordinate system be a vector n, a global stress value $\sigma_g$ in the global coordinate system can be calculated by Equation (12).

$$\sigma_g = \boldsymbol{n}^T \boldsymbol{\sigma} \boldsymbol{n} \qquad \cdots (12)$$

where,

$\sigma$: local stress in material coordinate system
$\boldsymbol{n}$: predetermined direction in global coordinate system

The predetermined direction in the global coordinate system is not particularly limited as long as it is a direction expressed in the global coordinate system, and a direction in which the calculation is performed may be set as appropriate by aligning directions of the stress.

(Residual stress distribution display step)

Subsequently, in the residual stress distribution display step S33, the residual stress distribution of the deformable portion obtained in the stress coordinate system converting step S31 is displayed.

In order to display the residual stress distribution, for example, it suffices to convert the coordinates of each of the measurement points for which the global stress value is obtained into coordinates on a DIC image of the deformable portion.

In order to convert into coordinates on the DIC image of the deformable portion 33, the coordinates (X, Y, Z) of each of the measurement points in the global coordinate system can be converted into coordinates (u, v) in a two-dimensional plane on the DIC image by Equation (13).

$$\begin{Bmatrix} u \\ v \\ 1 \end{Bmatrix} = \begin{pmatrix} f_x & 0 & c_x \\ 0 & f_y & c_y \\ 0 & 0 & 1 \end{pmatrix} \begin{pmatrix} r_{11} & r_{12} & r_{11} & t_1 \\ r_{21} & r_{22} & r_{21} & t_2 \\ r_{31} & r_{32} & r_{31} & t_3 \end{pmatrix} \begin{Bmatrix} X \\ Y \\ Z \\ 1 \end{Bmatrix} = A(R|t) \begin{Bmatrix} X \\ Y \\ Z \\ 1 \end{Bmatrix} \qquad \cdots (13)$$

where,

$f_x$, $f_y$: focal length
$c_x$, $c_y$: optical center
(image center)
$r_{ij}$: rotation matrix component
$t_i$: translation matrix component
$A$: intrinsic parameter matrix
$(R|t)$: extrinsic parameter matrix

In the present embodiment, the residual stress distribution calculating step S30 is performed after the completion of the sequential stress updating step S20. However, in order to display the strain distribution of the deformable portion 33 in the deformation process, in the sequential stress updating step S29, the residual stress distribution calculating step S30 may be performed for each time step after the stress update of all the measurements is completed (S29b) for each time step.

As described above, in the calculation method of the residual stress distribution according to the present embodiment, the strain history and the spin history of the deformable portion 33 in the deformation process of plastically deforming the metal sheet 31 are acquired, and the stress in the material coordinate system is sequentially updated and obtained for the plurality of measurement points set in the deformable portion 33. Then, the stress in the material coordinate system of each of the measurement points at the end of deformation is converted into a global stress value in a predetermined direction in the global coordinate system. As a result, even in a case where the directions of the material coordinate system of the deformable portion 33 of the metal sheet 31 subjected to plastic deformation change, it is possible to obtain the distribution of the residual stress with high accuracy in the deformable portion 33 by aligning the directions of the stress.

In the above description, the residual stress distribution calculating step S30 includes the residual stress distribution display step S33 of displaying the global stress value in the global coordinate system; however, the present invention is not limited to the case of including the residual stress distribution display step S33.

In addition, in the calculation method of the residual stress distribution according to the present embodiment, the assumptive incremental strain calculating step S23 presumes the deformation state from the deformation process of the deformable portion in the metal sheet and calculates the assumptive incremental strain based on the mechanics of plasticity in the presumed deformation state. Incidentally, in the present invention, the assumptive incremental strain calculating step may be a step of performing the finite element analysis of a process in which the metal sheet is plastically deformed and presuming a deformation state (for example, a strain ratio) of the deformable portion from the result.

In a case where the assumptive incremental strain is calculated by presuming the deformation state of the deformable portion by the finite element analysis of the deformation process of the metal sheet, the entire metal sheet does not need to be analyzed, and it suffices to model only the deformable portion and the vicinity thereof and to perform the finite element analysis. This makes it possible to assume the deformation state of the deformable portion in a shorter time as compared with the finite element analysis in which the entire metal sheet is analyzed.

In particular, the finite element analysis using a solid element in which the stress in the sheet thickness direction can be calculated with high accuracy greatly increases the calculation time and thus is hardly used for a press forming analysis of general press-formed products. However, if a part of the metal sheet including the deformable portion is to be analyzed, the deformation state of the deformable portion can be estimated in a short time and with high accuracy even in a case where the finite element analysis is performed using the solid element. Therefore, in the present invention, it is made possible to calculate the residual stress distribution with higher accuracy by presuming the deformation state estimated by the finite element analysis using the solid element and combining acquisition of the strain history and the spin history in the deformation process.

<Calculation device of residual stress distribution>

A calculation device of the residual stress distribution (hereinafter, referred to as "residual stress distribution calculating device") according to an embodiment of the present invention calculates the distribution of the residual stress generated in a metal sheet subjected to plastic deformation. Hereinafter, each component of a residual stress distribution calculating device 1 will be described for the case of calculating the distribution of the residual stress generated in the metal sheet 31 plastically deformed using the punch 41 and the die 43 as illustrated in FIG. 3.

As illustrated in FIG. 3 as an example, the residual stress distribution calculating device 1 includes a display device 3, an input device 5, a main data storage 7, an auxiliary data storage 9, a camera 11, a camera 13, and a measurement control and arithmetic processing unit 15.

In the residual stress distribution calculating device 1, a device configured by a personal computer (PC) or the like can be adopted as the display device 3, the input device 5, the main data storage 7, the auxiliary data storage 9, and the measurement control and arithmetic processing unit 15. In this case, the display device 3, the input device 5, the main data storage 7, the auxiliary data storage 9, the camera 11, and the camera 13 are connected to the measurement control and arithmetic processing unit 15, and the functions thereof are executed by a command from the measurement control and arithmetic processing unit 15.

The display device 3 is used for displaying an image of the deformable portion 33 captured by the camera 11 and the camera 13, a calculated residual stress distribution, and others and includes a liquid crystal monitor (LCD monitor) or the like.

The input device 5 is used for a display instruction of an image of the deformable portion 33 of the residual stress distribution, condition input by an operator, and others and includes a keyboard, a mouse, or the like.

The main data storage 7 is used for storing various types of files such as an image obtained by capturing the deformable portion 33 of the metal sheet 31 by the camera 11 or the camera 13 or a program for calculating the residual stress distribution and includes a hard disk or the like.

The auxiliary data storage 9 is used for temporary storage or calculation of data used by the measurement control and arithmetic processing unit 15 and includes a random access memory (RAM) or the like.

The camera 11 and the camera 13 perform stereo photography on the surface of the deformable portion 33 in the deformation process of the metal sheet 31.

The measurement control and arithmetic processing unit 15 includes a measurement control unit 17 that controls measurement of a deformation history on the surface of the deformable portion 33 and an arithmetic processing unit 19 that performs arithmetic processing for calculating the residual stress distribution based on the measured deformation history on the surface.

The measurement control unit 17 includes an image capturing unit 21 and a three-dimensional coordinates calculating unit 23. The image capturing unit 21 controls imaging of the surface of the deformable portion 33 at predetermined time intervals in the deformation process of the metal sheet 31 by the two cameras 11 and 13. The three-dimensional coordinates calculating unit 23 performs image analysis on the captured image to calculate three-dimensional coordinates in the deformation process for a plurality of measurement points set in the deformable portion 33.

In the present embodiment, the three-dimensional coordinates calculating unit 23 performs image processing by DIC on an image obtained by stereoscopically photographing the deformable portion 33 of the metal sheet 31 by the camera 11 and the camera 13 and calculates three-dimensional coordinates of the plurality of measurement points set in the deformable portion 33.

In the DIC, the surface of the deformable portion is photographed at predetermined time intervals in the deformation process of the metal sheet 31, and the image (hereinafter, referred to as "DIC image") photographed at each time step are subjected to image analysis. This makes it possible to perform measurement with the three-dimensional coordinates of the respective measurement points at each time step from the start of deformation to the end of deformation.

The arithmetic processing unit 19 includes a deformation history acquiring unit 25, a sequential stress updating unit 27, and a residual stress distribution calculating unit 29.

<<Deformation history acquiring unit>>

The deformation history acquiring unit 25 acquires the deformation history on the surface of the deformable portion 33 of the metal sheet 31 in a deformation process of plastically deforming the metal sheet 31 and acquires the strain history and the spin history generated in the deformable portion 33 from the acquired deformation history on the surface. As illustrated in FIG. 3, the deformation history acquiring unit 25 includes a surface deformation history acquiring unit 25a, a strain history acquiring unit 25b, and a spin history acquiring unit 25c.

The surface deformation history acquiring unit 25a acquires three-dimensional coordinates measured in a deformation process of plastically deforming the metal sheet 31 at a plurality of measurement points set in the deformable portion 33 of the metal sheet 31 as a surface deformation history from the start of deformation to the end of deformation of the deformable portion 33.

The strain history acquiring unit 25b acquires a strain history of the deformable portion 33 in the deformation process from the deformation history on the surface of the deformable portion 33 acquired by the surface deformation history acquiring unit 25a.

The spin history acquiring unit 25c acquires a spin history of the deformable portion 33 in the deformation process from the deformation history on the surface of the deformable portion 33 acquired by the surface deformation history acquiring unit 25a.

<<Sequential stress updating unit>>

The sequential stress updating unit 27 sequentially updates and obtains the stress in the material coordinate system of each of the measurement points set in the deformable portion 33 of the metal sheet 31 from the start to the end of deformation in the deformation process. As illustrated in FIG. 3, the sequential stress updating unit 27 includes an acquired incremental strain calculating unit 27a, an assumptive incremental strain calculating unit 27b, an acquired incremental spin calculating unit 27c, an incremental stress calculating unit 27d, and a sequential stress updating unit 27e.

(Acquired incremental strain calculating unit)

The acquired incremental strain calculating unit 27a calculates an acquired incremental strain from the strain history acquired by the strain history acquiring unit 25b. The acquired incremental strain is an increment of strain for which the strain history has been acquired by the strain history acquiring unit 25b.

For example, in a case where the three-dimensional coordinates in the deformation process of each of the measurement points set on the surface of the deformable portion 33 by the surface deformation history acquiring unit 25a are acquired as the deformation history on the surface, the strain history acquired by the strain history acquiring unit 25b is strain in two in-plane directions and in-plane shear strain. In this case, the acquired incremental strain calculated by the acquired incremental strain calculating unit 27a is incremental strain of both the strain in the two in-plane directions and the in-plane shear strain.

The acquired incremental strain is further calculated for each time step in which the strain history is acquired in the deformation process. The acquired incremental strain at each time step can be calculated from, for example, the strain at the concerned time step and the strain at preceding and following time steps.

(Assumptive incremental strain calculating unit)

The assumptive incremental strain calculating unit 27b calculates the assumptive incremental strain. The assumptive incremental strain is an incremental of strain other than the strain for which the strain history is acquired by the strain history acquiring unit 25b. The strain other than the strain for which the strain history is acquired can be calculated by presuming a deformation state from the deformation process of the deformable portion 33 and by being based on the mechanics of plasticity in the presumed deformation state.

The calculation of the assumptive incremental strain by the assumptive incremental strain calculating unit 27b may be performed by a procedure similar to that in the assumptive incremental strain calculating step S23 of the calculation method of the residual stress distribution according to the present embodiment described above.

That is, first, the deformation state of the deformable portion 33 of the metal sheet 31 is assumed to be a plane stress state. Then, based on the mechanics of plasticity in the presumed deformation state, an equation that gives an incremental stress in the out-of-plane direction is obtained from the strain in the two in-plane directions and the in-plane shear strain acquired by the strain history acquiring unit 25b and strain including an unknown out-of-plane direction.

Presuming that the deformation state of the deformable portion 33 is a plane stress state, incremental stress in the out-of-plane direction is 0, and thus the strain in the out-of-plane direction can be uniquely calculated using the strain and the equation of the incremental stress based on the mechanics of plasticity.

As described above, in the assumptive incremental strain calculating unit 27b, the strain other than the strain for which the strain history has been acquired at each time step in the deformation process is calculated by presuming the deformation state of the deformable portion 33. Then, similarly to the acquired incremental strain described above, the assumptive incremental strain is calculated from the strain calculated presuming the deformation state of the deformable portion at each time step in the deformation process. Similarly to the acquired incremental strain described above, the assumptive incremental strain at each time step can be calculated from the strain obtained at the time step and the preceding and following time steps.

The assumptive incremental strain calculating unit 27b is not limited to perform calculation from the strain obtained presuming the deformation state as described above but may give a value of the assumptive incremental strain based on another presumed deformation state.

(Acquired incremental spin calculating unit)

The acquired incremental spin calculating unit 27c calculates the acquired incremental spin from the spin history acquired by the spin history acquiring unit 25c. The acquired incremental spin is an increment of the spin of the deformable portion obtained at predetermined time intervals. The acquired incremental spin at each time step can be calculated from, for example, the spin at the time step and the spins at preceding and following time steps.

(Incremental stress calculating unit)

The incremental stress calculating unit 27d calculates the incremental stress of the deformable portion 33 in the deformation process using the acquired incremental strain, the assumptive incremental strain, and the acquired incremental spin. The calculation of the incremental stress by the incremental stress calculating unit 27d can be performed in a similar procedure to the incremental stress calculating step S27 of the calculation method of the residual stress distribution according to the embodiment described above.

In the calculation of the incremental stress by the incremental stress calculating unit 27d, as described above, the Yoshida-Uemori model (Non-Patent Literature 1) capable of reproducing the Bauschinger effect with high accuracy can be suitably applied as the material constitutive law. Incidentally, the incremental stress calculating unit 27d is not limited to applying the Yoshida-Uemori model as the material constitutive law but may apply any material constitutive law. In addition, the yield function f used to give the elastic-plastic tangent modulus tensor $C^{ep}$ by the material constitutive law is not limited to the yield function of the isotropic von Mises, and any yield function such as Hill'48 or Yld2000-2d capable of expressing the anisotropy of the material (metal sheet) with high accuracy may be used.

(Sequential stress updating unit)

The sequential stress updating unit 27e sequentially updates the stress in a material coordinate system (local stress) of each of the measurement points from the start to the end of deformation in the deformation process using the incremental stress calculated for each of the measurement points.

The sequential stress updating unit 27e first, in a certain time step in the deformation process, updates the local stress using the incremental stress calculated for each of the measurement points.

Next, the sequential stress updating unit 27e determines whether or not the update of the local stress has been completed for all the measurement points. In a case where it is determined that the update of the local stress has not been completed for all the measurement points, the processing by the acquired incremental strain calculating unit 27a, the assumptive incremental strain calculating unit 27b, the acquired incremental spin calculating unit 27c, and the incremental stress calculating unit 27d is performed for a measurement point for which the local stress has not been updated. Then, the sequential stress updating unit 27e updates the local stress at the measurement point where the local stress has not been updated.

In a case where it is determined that the local stress has been updated for all the measurement points, the sequential stress updating unit 27e determines whether or not the deformation of the metal sheet 31 has ended, namely, whether or not there is a next time step before the end of deformation of the metal sheet 31.

In a case where it is determined that the deformation has not ended, the process proceeds to the next time step in the deformation process, and processing by the acquired incremental strain calculating unit 27a, the assumptive incremental strain calculating unit 27b, the acquired incremental spin calculating unit 27c, and the incremental stress calculating unit 27d is performed for all the measurement points. Then, the local stress is updated for all the measurement points. In a case where it is determined that the deformation has ended, the processing by the sequential stress updating unit 27e ends.

In this manner, the sequential stress updating unit 27 sequentially updates the stress in the material coordinate system of all the measurement points from the start of deformation to the end of deformation.

<<Residual stress distribution calculating unit>>

The residual stress distribution calculating unit 29 converts the stress in the material coordinate system of each of the measurement points at the end of deformation into stress in the global coordinate system and calculates the residual stress distribution. In the present embodiment, the residual stress distribution calculating unit 29 includes a stress coordinate system converting unit 29a and a residual stress distribution displaying unit 29b.

(Stress coordinate system converting unit)

The stress coordinate system converting unit 29a converts the stress at the end of deformation among the pieces of stress in the material coordinate system of the respective measurement points obtained by sequentially updating from the start of deformation to the end of deformation by the sequential stress updating unit 27 into a stress value in a predetermined direction in the global coordinate system (global stress value). Then, the stress coordinate system converting unit 29a obtains the converted global stress value of each of the measurement points as the residual stress distribution of the deformable portion 33.

Let the local stress in the material coordinate system obtained for each of the measurement points be $\sigma$ and a predetermined direction in the global coordinate system be a vector n, the global stress value $\sigma_g$ in the global coordinate system can be calculated by Equation (12) described above.

(Residual stress distribution displaying unit)

The residual stress distribution displaying unit 29b displays the residual stress distribution of the deformable portion 33 obtained by the stress coordinate system converting unit 29a. In order to display the residual stress distribution by the residual stress distribution displaying unit 29b, similarly to the residual stress distribution display step S33 described above, the coordinates of each of the measurement points for which the global stress value is obtained are preferably converted into coordinates on the DIC image of the deformable portion 33. In order to convert into coordinates on the DIC image of the deformable portion 33, the coordinates (X, Y, Z) of each of the measurement points in the global coordinate system can be converted into coordinates (u, v) in a two-dimensional plane on the DIC image by Equation (13) described above.

As described above, according to the residual stress distribution calculating device 1 according to the present embodiment, by converting all the measurement points of the deformable portion 33 at the end of deformation into stress values in the global coordinate system and displaying the stress values, it is made possible to display a highly accurate distribution of the residual stress with the generation direction of stress aligned. Furthermore, according to the present invention, it is possible to acquire a history of a highly accurate stress distribution during deformation. Furthermore, it is possible to accurately and easily calculate the residual stress distribution generated in the metal sheet even in a case of shear deformation or the like accompanied by fracture of the metal sheet, which is difficult to estimate by the finite element method.

<Calculation program of residual stress distribution>

An embodiment of the present invention can be configured as a calculation program of the residual stress distribution that causes a computer to function as each unit of the residual stress distribution calculating device 1 described above.

That is, the calculation program of the residual stress distribution according to the embodiment of the present invention calculates the distribution of the residual stress generated in a metal sheet subjected to plastic deformation. The calculation program of the residual stress distribution according to the present embodiment causes a computer to function as the deformation history acquiring unit 25, the sequential stress updating unit 27, and the residual stress distribution calculating unit 29 of the residual stress distribution calculating device 1.

The calculation program of the residual stress distribution causes the deformation history acquiring unit 25 to function as the surface deformation history acquiring unit 25a, the strain history acquiring unit 25b, and the spin history acquiring unit 25c. The calculation program of the residual stress distribution causes the sequential stress updating unit 27 to function as the acquired incremental strain calculating unit 27a, the assumptive incremental strain calculating unit 27b, the acquired incremental spin calculating unit 27c, the incremental stress calculating unit 27d, and the sequential stress updating unit 27e.

Furthermore, the calculation program of the residual stress distribution causes the residual stress distribution calculating unit 29 to function as the stress coordinate system converting unit 29a and the residual stress distribution displaying unit 29b.

As described above, in the calculation device and the calculation program of the residual stress distribution according to the present embodiment, the strain history and the spin history of the deformable portion 33 in the deformation process of plastically deforming the metal sheet 31 are acquired, and the stress in the material coordinate system is sequentially updated and obtained for the plurality of measurement points set in the deformable portion 33. Then, the stress in the material coordinate system at the end of deformation is converted into a stress value in a predetermined direction in the global coordinate system. As a result, even in a case where the directions of the material coordinate system of the deformable portion of the metal sheet subjected to plastic deformation change, it is possible to obtain the distribution of the residual stress with high accuracy in the deformable portion by aligning the directions of the stress. Furthermore, according to the present invention, it is possible to acquire a history of a highly accurate stress distribution during deformation. Furthermore, it is possible to accurately and easily calculate the residual stress distribution generated in the metal sheet even in a case of shear deformation or the like accompanied by fracture of the metal sheet, which is difficult to estimate by the finite element method.

In the above description, the residual stress distribution calculating unit 29 includes the residual stress distribution displaying unit 29b that displays the global stress value obtained by converting the local stress in the material coordinate system of each of the measurement points into the stress value in the predetermined direction of the global coordinate system. However, the present invention is not limited to the configuration of including the residual stress distribution displaying unit 29b.

In addition, in the calculation device and the calculation program of the residual stress distribution according to the embodiments, the assumptive incremental strain calculating unit 27b calculates the assumptive incremental strain based on the mechanics of plasticity in the deformation state presumed from the deformation process of the deformable portion 33 in the metal sheet 31. Incidentally, in the present invention, the assumptive incremental strain calculating unit may perform the finite element analysis of a process in which the metal sheet is plastically deformed and presuming a deformation state (for example, a strain ratio) of the deformable portion from the result.

In a case where the assumptive incremental strain is calculated by presuming the deformation state of the deformable portion by the finite element analysis of the deformation process of the metal sheet, as described above, the entire metal sheet does not need to be analyzed, and it suffices to model only the deformable portion and the vicinity thereof and to perform the finite element analysis. This makes it possible to assume the deformation state of the deformable portion in a shorter time as compared with the finite element analysis in which the entire metal sheet is analyzed. Furthermore, it is also possible to use a solid element that enables calculation of the stress in the sheet thickness direction with high accuracy in the finite element analysis, whereby the residual stress distribution can be calculated with higher accuracy.

The calculation device and the calculation program of the residual stress distribution according to the invention are not limited to measuring the three-dimensional coordinates of each of the measurement points by DIC and may be any device and any program as long as the three-dimensional coordinates of each of the measurement points can be measured at predetermined time intervals from the start of deformation to the end of deformation. In addition, the surface deformation history acquiring unit of the calculation device and the calculation program of the residual stress distribution according to the invention may acquire the three-dimensional coordinates of each of the measurement points measured at predetermined time intervals from the start of deformation to the end of deformation as a deformation history on the surface.

As described above, the invention calculates the residual stress distribution by acquiring the strain history and the spin history based on the deformation history on the surface of the deformable portion in the metal sheet. Therefore, it is possible to accurately calculate a residual stress distribution even for a nonuniform metal sheet having two or more types of phases, which are problematic in measurement of residual stress using X rays or supersonic waves in the prior art.

In addition, as described above, in order to predict the residual stress distribution with high accuracy in the finite element analysis, a considerable calculation time is required, and an analysis is difficult in a case where breakage such as cracks or shearing occurs. In particular, since a metal sheet subjected to plastic deformation often breaks from an end surface of the metal sheet, it is important to accurately obtain the residual stress distribution on the end surface of the metal sheet in order to grasp the fatigue life and delayed fracture properties. On the other hand, according to the present invention, it is possible to easily measure the strain history and the spin history of a deformable portion (such as an end surface) of the metal sheet in a deformation process of plastically deforming the metal sheet, and thus it is possible to accurately calculate the residual stress distribution on the end surface of the metal sheet.

The above description is for a case where the incremental stress is calculated using the Yoshida-Uemori model. However, in the Yoshida-Uemori model, since the stress-strain relation is defined by a velocity system, in a case of nonlinear deformation, an error occurs in the incremental stress unless the incremental strain is sufficiently reduced. Therefore, in the case where the incremental stress is calculated using the Yoshida-Uemori model, it is preferable to adjust the time interval at which the three-dimensional coordinates of each of the measurement points are acquired as the deformation history on the surface such that the incremental strain is less than or equal to $10^{-6}$.

In addition, it is conceivable that the deformation history on the surface acquired in the present invention includes measurement variation, and there is a concern that the strain history and the spin history acquired from the deformation history on the surface including such measurement variation also include noise.

Therefore, when the incremental stress is calculated using minute incremental strain (acquired incremental strain) calculated from the strain history, the influence of the noise of the strain history on the incremental stress increases, and the accuracy of sequentially calculated stress may be deteriorated. In such a case, it is preferable to calculate a highly accurate residual stress distribution by performing smoothing on the strain history with a low pass filter or the like for noise reduction.

Furthermore, according to the present invention, it is possible to know not only the residual stress after the end of deformation as in the prior art but also the stress during deformation. Therefore, it is possible to calculate the maximum stress generated in the deformable body and the stress released by springback in the press forming.

Examples

Verification of effects of the calculation method of residual stress distribution according to the invention have been conducted, which will be described below.

In Examples, a distribution of residual stress generated by plastically deforming a metal sheet 51 illustrated in FIG. 5 in a tensile test and applying predetermined tensile deformation to a deformable portion 53 in the metal sheet 51 was calculated by the method according to the present invention (inventive example). Furthermore, as a comparative example, a finite element analysis of a process of applying tensile deformation to the metal sheet 51 was performed, a residual stress distribution generated at the deformable portion 53 was obtained, and an error from the residual stress distribution obtained as the inventive example was calculated. In the inventive example and the comparative example, steel sheets having tensile strengths of 780, 980, and 1470 MPa-grades were used for the metal sheet 51.

In the inventive example, first, the deformable portion 53 was photographed at predetermined time intervals in the deformation process of applying tensile deformation to the metal sheet 51 by DIC, and a deformation history on the surface was acquired by measuring three-dimensional coordinates of each of measurement points set to the deformable portion 53. Then, a strain history and a spin history of the deformable portion 53 in the deformation process were acquired from the acquired deformation history on the surface.

Next, the incremental stress of the deformable portion 53 in the deformation process was calculated using acquired incremental strain and an acquired incremental spin calculated from the acquired strain history and spin history and assumptive incremental strain calculated presuming a deformation state of the deformable portion 53. In the calculation of the incremental stress of the deformable portion 53 in the deformation process, a plane stress state was presumed as the deformation state of the deformable portion 53 in the example.

Subsequently, the stress of the deformable portion 53 was sequentially updated using the calculated incremental stress, and the stress in the material coordinate system of the deformable portion 53 at each time step from the start of deformation to the end of deformation in the deformation process was calculated. Then, the stress in the material coordinate system at the end of deformation was converted into stress in the tensile direction in the global coordinate system.

Furthermore, as the comparative example, a finite element analysis of a uniaxial tensile test of the metal sheet 51 was performed, a stress distribution of the deformable portion 53 of the metal sheet 51 in the deformation process was calculated, and the calculated stress distribution was compared with the residual stress distribution obtained as the inventive example.

Table 1 shows the average value of the residual stress in a range of $\pm 25$ mm from the center in the longitudinal direction of the metal sheet 51 at the end of deformation and the root mean square error (RMSE) obtained as the inventive example and the comparative example.

Table 1

| Tensile Strength (MPa) | Type of Metal Sheet | Inventive Example (MPa) | Comparative Example (MPa) | Root Mean Square Error |
|---|---|---|---|---|
| 780 grade | Hot-Rolled Steel Sheet | 827 | 826 | 18.6 |
| 980 grade | Cold-Rolled Steel Sheet | 1002 | 1010 | 44.9 |
| 1470 grade | Cold-Rolled Steel Sheet | 1499 | 1492 | 46.4 |

From Table 1, it can be seen that the inventive example is in good agreement with the comparative example regardless of the tensile strength of a steel sheet used for the metal sheet 51.

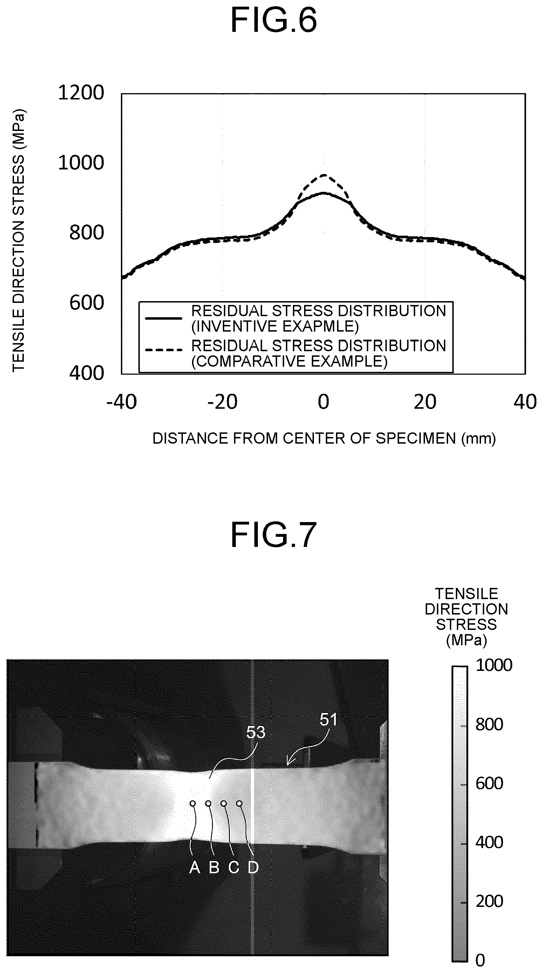

Illustrated in FIG. 6 is a residual stress distribution in the tensile direction on the center line in the width direction of the metal sheet 51 in a case where the steel sheet of 780 grade is used for the metal sheet 51. In FIG. 6, calculated values of the residual stress according to the inventive example and the comparative example are in good agreement except for a range of $\pm 6$ mm from the center of the metal sheet 51, and it has been confirmed that the distribution of the residual stress can be accurately calculated according to the invention.

Furthermore, from the graph of FIG. 6, it can be confirmed that necking occurs at the central portion of the metal sheet 51 and that deformation starts to concentrate in the sheet thickness direction, and as a result, the stress is concentrated.

On the other hand, in the vicinity of the center of the metal sheet 51, there is a deviation in the values of the residual stress between the inventive example and the comparative example. This deviation is considered as follows.

In the finite element analysis, it is known that an analysis element size affects reproducibility of local deformation such as a necking deformable portion. As the analysis element size is smaller, deformation to only some analysis elements is concentrated, and local deformation is likely to occur in a narrower range, and thus high stress is likely to occur locally. However, the analysis element size is often determined depending on the sheet thickness of the material or the like, and the deformation state of the necking portion calculated by the finite element analysis and the actual deformation state of the material do not necessarily coincide with each other. On the other hand, in the method according to the present invention, since the deformation in the necking portion generated in the metal sheet is actually measured, it is conceivable that the present invention in which the residual stress is calculated based on the actual deformation has higher accuracy.

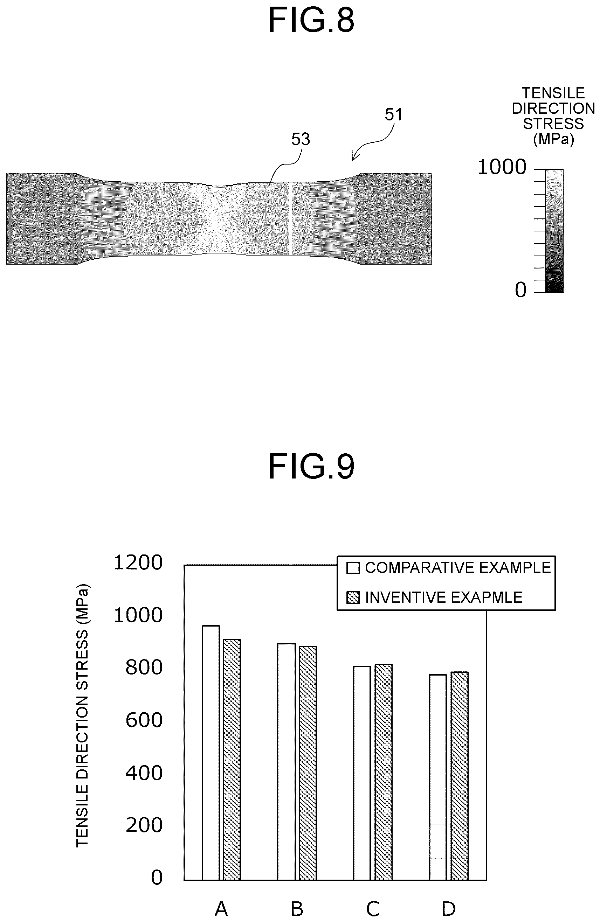

Furthermore, as examples in which the residual stress distribution is displayed on the surface of the metal sheet 51, the distribution according to the inventive example is illustrated in FIG. 7, and the distribution according to the comparative example is illustrated in FIG. 8.

As illustrated in FIG. 7, it can be seen that a portion where the residual stress is concentrated is successfully accurately estimated in the inventive example. Illustrated in FIG. 9 is the results of the inventive example and the comparative example of the residual stress in the tensile direction at each of positions A, B, C, and D in the deformable portion 53 of the metal sheet 51 illustrated in FIG. 7.

As illustrated in FIG. 9, it can be seen that, at the position A, values of the residual stress are different between the inventive example and the comparative example, whereas at the positions B, C, and D, values of the residual stress in the inventive example favorably coincide with values of the comparative example.

From the above results, it is illustrated that, according to the method of the present invention, it is possible to accurately calculate the distribution of the residual stress generated at the deformable portion of the metal sheet subjected to plastic deformation.

Industrial Applicability

According to the present invention, it is possible to provide the calculation method, the calculation device, and the calculation program of a residual stress distribution that accurately and easily calculate a residual stress distribution generated in a metal sheet subjected to plastic deformation.

Reference Signs List

1 RESIDUAL STRESS DISTRIBUTION CALCULATING DEVICE
3 DISPLAY DEVICE
5 INPUT DEVICE
7 MAIN DATA STORAGE
9 AUXILIARY DATA STORAGE

**EP 4 575 437 B1**

11   CAMERA
13   CAMERA
15   MEASUREMENT CONTROL AND ARITHMETIC PROCESSING UNIT
17   MEASUREMENT CONTROL UNIT
19   ARITHMETIC PROCESSING UNIT
21   IMAGE CAPTURING UNIT
23   THREE-DIMENSIONAL COORDINATES CALCULATING UNIT
25   DEFORMATION HISTORY ACQUIRING UNIT
25a   SURFACE DEFORMATION HISTORY ACQUIRING UNIT
25b   STRAIN HISTORY ACQUIRING UNIT
25c   SPIN HISTORY ACQUIRING UNIT
27   SEQUENTIAL STRESS UPDATING UNIT
27a   ACQUIRED INCREMENTAL STRAIN CALCULATING UNIT
27b   ASSUMPTIVE INCREMENTAL STRAIN CALCULATING UNIT
27c   ACQUIRED INCREMENTAL SPIN CALCULATING UNIT
27d   INCREMENTAL STRESS CALCULATING UNIT
27e   SEQUENTIAL STRESS UPDATING UNIT
29   RESIDUAL STRESS DISTRIBUTION CALCULATING UNIT
29a   STRESS COORDINATE SYSTEM CONVERTING UNIT
29b   RESIDUAL STRESS DISTRIBUTION DISPLAYING UNIT
31   METAL SHEET
33   DEFORMABLE PORTION
41   PUNCH
43   DIE
51   METAL SHEET
53   DEFORMABLE PORTION

**Claims**

1.  A calculation method of a residual stress distribution for calculating a distribution of residual stress generated in a metal sheet (31) subjected to plastic deformation, the calculation method comprising:

    a deformation history acquiring step;
    a sequential stress updating step; and
    a residual stress distribution calculating step,
    wherein the deformation history acquiring step includes:

    a surface deformation history acquiring step of setting a plurality of measurement points on a surface of a deformable portion of the metal sheet and measuring three-dimensional coordinates of each of the measurement points in a deformation process of plastically deforming the metal sheet to acquire a deformation history on the surface from a start to an end of deformation of the deformable portion;
    a strain history acquiring step of acquiring a strain history of the deformable portion in the deformation process from the acquired deformation history on the surface of the deformable portion; and
    a spin history acquiring step of acquiring a spin history of the deformable portion in the deformation process from the acquired deformation history on the surface of the deformable portion,

    the sequential stress updating step includes:

    an acquired incremental strain calculating step of calculating acquired incremental strain from the strain history acquired in the strain history acquiring step;
    an assumptive incremental strain calculating step of calculating an assumptive incremental strain by presuming a deformation state of the deformable portion, the assumptive incremental strain being an increment of strain other than strain for which the strain history has been acquired in the strain history acquiring step;
    an acquired incremental spin calculating step of calculating an acquired incremental spin from the spin history acquired in the spin history acquiring step;
    an incremental stress calculating step of calculating incremental stress at each of the measurement points in accordance with a material constitutive law using the acquired incremental strain, the assumptive incremental strain, and the acquired incremental spin; and

a sequential stress updating step of sequentially updating stress in a material coordinate system of each of the measurement points from the start to the end of deformation in the deformation process using the incremental stress calculated for each of the measurement points, and

the residual stress distribution calculating step includes:

a stress coordinate system converting step of converting the stress in the material coordinate system of each of the measurement points at the end of deformation in the deformation process obtained by sequential update in the sequential stress updating step into a global stress value in a predetermined direction in a global coordinate system and obtaining the converted global stress value of each of the measurement points as a residual stress distribution of the deformable portion,

wherein the term spin is to be understood to mean a rotation of a material coordinate system of the metal sheet at a position of the metal sheet.

2. The calculation method of the residual stress distribution according to claim 1, wherein the residual stress distribution calculating step further includes a residual stress distribution display step of displaying the residual stress distribution of the deformable portion obtained in the stress coordinate system converting step.

3. The calculation method of the residual stress distribution according to claim 1 or 2, wherein the assumptive incremental strain calculating step presumes a deformation state from the deformation process of the deformable portion and calculates the assumptive incremental strain based on mechanics of plasticity in the deformation state that is presumed.

4. The calculation method of the residual stress distribution according to claim 1 or 2, wherein the assumptive incremental strain calculating step presumes a deformation state of the deformable portion by a finite element analysis of the deformation process of the metal sheet and calculates the assumptive incremental strain based on the deformation state that is presumed.

5. A calculation device (19) of a residual stress distribution for calculating a distribution of residual stress generated in a metal sheet (31) subjected to plastic deformation, the calculation device comprising:

a deformation history acquiring unit (25);
a sequential stress updating unit (27); and
a residual stress distribution calculating unit (29),
wherein the deformation history acquiring unit includes:

a surface deformation history acquiring unit (25a) configured to acquire, as a deformation history on a surface from a start to an end of deformation of a deformable portion, three-dimensional coordinates measured in a deformation process of plastically deforming the metal sheet, the three-dimensional coordinates measured for a plurality of measurement points set to the deformable portion of the metal sheet;
a strain history acquiring unit (25b) configured to acquire a strain history of the deformable portion in the deformation process from the acquired deformation history on the surface of the deformable portion; and
a spin history acquiring unit (25c) configured to acquire a spin history of the deformable portion in the deformation process from the acquired deformation history on the surface of the deformable portion,

the sequential stress updating unit includes:

an acquired incremental strain calculating unit (27a) configured to calculate acquired incremental strain from the strain history acquired by the strain history acquiring unit;
an assumptive incremental strain calculating unit (27b) configured to calculate an assumptive incremental strain by presuming a deformation state of the deformable portion, the assumptive incremental strain being an increment of strain other than strain for which the strain history has been acquired by the strain history acquiring unit;
an acquired incremental spin calculating unit (27c) configured to calculate an acquired incremental spin from the spin history acquired by the spin history acquiring unit;
an incremental stress calculating unit (27d) configured to calculate incremental stress at each of the measurement points in accordance with a material constitutive law using the acquired incremental strain, the assumptive incremental strain, and the acquired incremental spin; and

a sequential stress updating unit (27e) configured to sequentially update stress in a material coordinate system of each of the measurement points from the start to the end of deformation in the deformation process using the incremental stress calculated for each of the measurement points, and

the residual stress distribution calculating unit includes:

a stress coordinate system converting unit (29a) configured to convert the stress in the material coordinate system of each of the measurement points at the end of deformation in the deformation process obtained by sequential update by the sequential stress updating unit into a global stress value in a predetermined direction in a global coordinate system and obtains the converted global stress value of each of the measurement points as a residual stress distribution of the deformable portion, wherein the term spin is to be understood to mean a rotation of a material coordinate system of the metal sheet at a position of the metal sheet.

6. The calculation device of the residual stress distribution according to claim 5, wherein the residual stress distribution calculating unit further includes a residual stress distribution displaying unit (29b) configured to display the residual stress distribution of the deformable portion obtained by the stress coordinate system converting unit.

7. The calculation device of the residual stress distribution according to claim 5 or 6, wherein the assumptive incremental strain calculating unit is configured to presume a deformation state from the deformation process of the deformable portion and calculate the assumptive incremental strain based on mechanics of plasticity in the deformation state that is presumed.

8. The calculation device of the residual stress distribution according to claim 5 or 6, wherein the assumptive incremental strain calculating unit is configured to presume a deformation state of the deformable portion by a finite element analysis of the deformation process of the metal sheet and calculate the assumptive incremental strain based on the deformation state that is presumed.

9. A calculation program of a residual stress distribution for calculating a distribution of residual stress generated in a metal sheet (31) subjected to plastic deformation, the calculation program causing a computer (19) to function as:

a deformation history acquiring unit (25), a sequential stress updating unit (27), and a residual stress distribution calculating unit (29), wherein the deformation history acquiring unit includes:

a surface deformation history acquiring unit (25a) configured to acquire, as a deformation history on a surface from a start to an end of deformation of a deformable portion, three-dimensional coordinates measured in a deformation process of plastically deforming the metal sheet, the three-dimensional coordinates measured for a plurality of measurement points set to the deformable portion of the metal sheet; a strain history acquiring unit (25b) configured to acquire a strain history of the deformable portion in the deformation process from the acquired deformation history on the surface of the deformable portion; and a spin history acquiring unit (25c) configured to acquire a spin history of the deformable portion in the deformation process from the acquired deformation history on the surface of the deformable portion,

the sequential stress updating unit includes:

an acquired incremental strain calculating unit (27a) configured to calculate acquired incremental strain from the strain history acquired by the strain history acquiring unit; an assumptive incremental strain calculating unit (27b) configured to calculate an assumptive incremental strain by presuming a deformation state of the deformable portion, the assumptive incremental strain being an increment of strain other than strain for which the strain history has been acquired by the strain history acquiring unit; an acquired incremental spin calculating unit (27c) configured to calculate an acquired incremental spin from the spin history acquired by the spin history acquiring unit; an incremental stress calculating unit (27d) configured to calculate incremental stress at each of the measurement points in accordance with a material constitutive law using the acquired incremental strain, the assumptive incremental strain, and the acquired incremental spin; and a sequential stress updating unit (27e) configured to sequentially update stress in a material coordinate

22

system of each of the measurement points from the start to the end of deformation in the deformation process using the incremental stress calculated for each of the measurement points, and

the residual stress distribution calculating unit includes:
a stress coordinate system converting unit (29a) configured to convert the stress in the material coordinate system of each of the measurement points at the end of deformation in the deformation process obtained by sequential update by the sequential stress updating unit into a global stress value in a predetermined direction in a global coordinate system and obtains the converted global stress value of each of the measurement points as a residual stress distribution of the deformable portion,
wherein the term spin is to be understood to mean a rotation of a material coordinate system of the metal sheet at a position of the metal sheet.

10. The calculation program of the residual stress distribution according to claim 9, wherein the residual stress distribution calculating unit further includes a residual stress distribution displaying unit (29b) configured to display the residual stress distribution of the deformable portion obtained by the stress coordinate system converting unit.

11. The calculation program of the residual stress distribution according to claim 9 or 10, wherein the assumptive incremental strain calculating unit is configured to presume a deformation state from the deformation process of the deformable portion and calculate the assumptive incremental strain based on mechanics of plasticity in the deformation state that is presumed.

12. The calculation program of the residual stress distribution according to claim 9 or 10, wherein the assumptive incremental strain calculating unit is configured to presume a deformation state of the deformable portion by a finite element analysis of the deformation process of the metal sheet and calculate the assumptive incremental strain based on the deformation state that is presumed.

**Patentansprüche**

1. Berechnungsverfahren einer Restspannungsverteilung zum Berechnen einer Restspannungsverteilung von in einem Metallblech (31) erzeugter Restspannung, das einer plastischen Verformung unterzogen wird, das Berechnungsverfahren umfassend:

einen Verformungsverlauf erfassenden Schritt;
einen Schritt der sequentiellen Spannungsaktualisierung; und
einen Schritt zum Berechnen der Restspannungsverteilung,
wobei der Verformungsverlauf erfassende Schritt einschließt:

einen Oberflächenverformungsverlauf erfassenden Schritt zum Festlegen einer Vielzahl von Messpunkten auf einer Oberfläche eines verformbaren Bereichs des Metallblechs und zum Messen dreidimensionaler Koordinaten jedes der Messpunkte in einem Verformungsprozess, bei dem das Metallblech plastisch verformt wird, um einen Oberflächenverformungsverlauf auf der Oberfläche vom Beginn bis zum Ende der Verformung des verformbaren Bereichs zu erfassen;
einen Dehnungsverlauf erfassenden Schritt zum Erfassen eines Dehnungsverlaufs des verformbaren Bereichs in dem Verformungsprozess aus dem erfassten Oberflächenverformungsverlauf auf der Oberfläche des verformbaren Bereichs; und
einen Spinverlauf erfassenden Schritt zum Erfassen eines Spinverlaufs des verformbaren Bereichs in dem Verformungsprozess aus dem erfassten Oberflächenverformungsverlauf auf der Oberfläche des verformbaren Bereichs,
wobei der Schritt der sequentiellen Spannungsaktualisierung einschließt:

einen Schritt zum Berechnen des erfassten Dehnungsinkrements aus dem in dem Dehnungsverlauf erfassenden Schritt erfassten Dehnungsverlauf;
einen Schritt zum Berechnen des angenommenen Dehnungsinkrements durch Annehmen eines Verformungszustands des verformbaren Bereichs, wobei das angenommene Dehnungsinkrement ein Dehnungsinkrement einer Dehnung außer einer Dehnung ist, für die der Dehnungsverlauf in dem Dehnungsverlauf erfassenden Schritt erfasst worden ist;
einen Schritt zum Berechnen des erfassten Spininkrements aus dem in dem Spinverlauf erfassenden Schritt erfassten Spinverlauf;

einen Schritt zum Berechnen des Spannungsinkrements an jedem der Messpunkte in Übereinstimmung mit einem Materialkonstitutivgesetz unter Verwendung des erfassten Dehnungsinkrements, des angenommenen Dehnungsinkrements und des erfassten Spininkrements; und

einen Schritt der sequentiellen Spannungsaktualisierung zum sequentiellen Aktualisieren von Spannung in einem Materialkoordinatensystem jedes der Messpunkte vom Beginn bis zum Ende der Verformung in dem Verformungsprozess unter Verwendung des für jeden der Messpunkte berechneten Spannungsinkrements, und

wobei der Schritt zum Berechnen der Restspannungsverteilung einschließt:

einen Spannungskoordinatensystemumwandlungsschritt zum Umwandeln der Spannung in dem Materialkoordinatensystem jedes der Messpunkte am Ende der Verformung in dem Verformungsprozess, die durch sequentielle Aktualisierung in dem Schritt der sequentiellen Spannungsaktualisierung erhalten wird, in einen globalen Spannungswert in einer vorgegebenen Richtung in einem globalen Koordinatensystem und zum Erhalten des umgewandelten globalen Spannungswerts jedes der Messpunkte als eine Restspannungsverteilung des verformbaren Bereichs,

wobei der Begriff Spin so zu verstehen ist, dass er eine Rotation eines Materialkoordinatensystems des Metallblechs an einer Position des Metallblechs bedeutet.

2. Berechnungsverfahren der Restspannungsverteilung nach Anspruch 1, wobei der Schritt zum Berechnen der Restspannungsverteilung weiter einen Restspannungsverteilungsanzeigeschritt zum Anzeigen der Restspannungsverteilung des verformbaren Bereichs, die in dem Spannungskoordinatensystemumwandlungsschritt erhalten wurde, einschließt.

3. Berechnungsverfahren der Restspannungsverteilung nach Anspruch 1 oder 2, wobei der Schritt zum Berechnen des angenommenen Dehnungsinkrements einen Verformungszustand aus dem Verformungsprozess des verformbaren Bereichs annimmt und das angenommene Dehnungsinkrement basierend auf Plastizitätsmechanik in dem Verformungszustand, der angenommen wird, berechnet.

4. Berechnungsverfahren der Restspannungsverteilung nach Anspruch 1 oder 2, wobei der Schritt zum Berechnen des angenommenen Dehnungsinkrements einen Verformungszustand des verformbaren Bereichs durch eine Finite-Elemente-Analyse des Verformungsprozesses des Metallblechs annimmt und das angenommene Dehnungsinkrement basierend auf dem Verformungszustand, der angenommen wird, berechnet.

5. Berechnungsvorrichtung (19) einer Restspannungsverteilung zum Berechnen einer Restspannungsverteilung von in einem Metallblech (31) erzeugter Restspannung, das einer plastischen Verformung unterzogen wird, wobei die Berechnungsvorrichtung umfasst:

eine Verformungsverlauf erfassende Einheit (25);
eine Einheit zur sequentiellen Spannungsaktualisierung (27); und
eine Restspannungsverteilung berechnende Einheit (29),
wobei die Verformungsverlauf erfassende Einheit einschließt:

eine Oberflächenverformungsverlauf erfassende Einheit (25a), die ausgebildet ist, als einen Verformungsverlauf auf einer Oberfläche vom Beginn bis zum Ende der Verformung eines verformbaren Bereichs dreidimensionale Koordinaten zu erfassen, die in einem Verformungsprozess gemessen werden, bei dem das Metallblech plastisch verformt wird, wobei die dreidimensionalen Koordinaten für eine Vielzahl von Messpunkten gemessen werden, die an dem verformbaren Bereich des Metallblechs festgelegt werden;
eine Dehnungsverlauf erfassende Einheit (25b), die ausgebildet ist, einen Dehnungsverlauf des verformbaren Bereichs in dem Verformungsprozess aus dem erfassten Oberflächenverformungsverlauf auf der Oberfläche des verformbaren Bereichs zu erfassen; und
eine Spinverlauf erfassende Einheit (25c), die ausgebildet ist, einen Spinverlauf des verformbaren Bereichs in dem Verformungsprozess aus dem erfassten Oberflächenverformungsverlauf auf der Oberfläche des verformbaren Bereichs zu erfassen,

wobei die Einheit zur sequentiellen Spannungsaktualisierung einschließt:

eine Einheit (27a) zum Berechnen des erfassten Dehnungsinkrements, die ausgebildet ist, das erfasste Dehnungsinkrement aus dem von der Dehnungsverlauf erfassenden Einheit erfassten Dehnungsverlauf zu berechnen;

eine Einheit (27b) zum Berechnen des angenommenen Dehnungsinkrements, die ausgebildet ist, ein angenommenes Dehnungsinkrement durch Annehmen eines Verformungszustands des verformbaren Bereichs zu berechnen, wobei das angenommene Dehnungsinkrement ein Dehnungsinkrement ist, das sich von der Dehnung unterscheidet, für die der Dehnungsverlauf von der Dehnungsverlauf erfassenden Einheit erfasst wurde;

eine Einheit (27c) zum Berechnen des erfassten Spininkrements, die ausgebildet ist, ein erfasstes Spininkrement aus dem von der Spinverlauf erfassenden Einheit erfassten Spinverlauf zu berechnen;

eine Einheit (27d) zum Berechnen des Spannungsinkrements, die ausgebildet ist, das Spannungsinkrement an jedem der Messpunkte in Übereinstimmung mit einem Materialkonstitutivgesetz unter Verwendung des erfassten Dehnungsinkrements, des angenommenen Dehnungsinkrements und des erfassten Spininkrements zu berechnen; und

eine Einheit (27e) zur sequentiellen Spannungsaktualisierung, die ausgebildet ist, Spannung in einem Materialkoordinatensystem jedes der Messpunkte vom Beginn bis zum Ende der Verformung in dem Verformungsprozess unter Verwendung des für jeden der Messpunkte berechneten Spannungsinkrements sequentiell zu aktualisieren, und

wobei die Restspannungsverteilung berechnende Einheit einschließt:

eine Spannungskoordinatensystemumwandlungseinheit (29a), die ausgebildet ist, die Spannung in dem Materialkoordinatensystem jedes der Messpunkte am Ende der Verformung in dem Verformungsprozess, die durch sequentielle Aktualisierung durch die Einheit zur sequentiellen Spannungsaktualisierung erhalten wird, in einen globalen Spannungswert in einer vorgegebenen Richtung in einem globalen Koordinatensystem umzuwandeln und den umgewandelten globalen Spannungswert jedes der Messpunkte als eine Restspannungsverteilung des verformbaren Bereichs zu erhalten,

wobei der Begriff Spin so zu verstehen ist, dass er eine Rotation eines Materialkoordinatensystems des Metallblechs an einer Position des Metallblechs bedeutet.

6. Berechnungsvorrichtung der Restspannungsverteilung nach Anspruch 5, wobei die Restspannungsverteilung berechnende Einheit weiter eine Restspannungsverteilunganzeigeeinheit (29b) einschließt, die ausgebildet ist, die Restspannungsverteilung des verformbaren Bereichs, die von der Spannungskoordinatensystemumwandlungseinheit erhalten wird, anzuzeigen.

7. Berechnungsvorrichtung der Restspannungsverteilung nach Anspruch 5 oder 6, wobei die Einheit zum Berechnen des angenommenen Dehnungsinkrements ausgebildet ist, einen Verformungszustand aus dem Verformungsprozess des verformbaren Bereichs anzunehmen und das angenommene Dehnungsinkrement basierend auf Plastizitätsmechanik in dem Verformungszustand, der angenommen wird, zu berechnen.

8. Berechnungsvorrichtung der Restspannungsverteilung nach Anspruch 5 oder 6, wobei die Einheit zum Berechnen des angenommenen Dehnungsinkrements ausgebildet ist, einen Verformungszustand des verformbaren Bereichs durch eine Finite-Elemente-Analyse des Verformungsprozesses des Metallblechs anzunehmen und das angenommene Dehnungsinkrement basierend auf dem Verformungszustand, der angenommen wird, zu berechnen.

9. Berechnungsprogramm einer Restspannungsverteilung zum Berechnen einer Restspannungsverteilung von in einem Metallblech (31) erzeugter Restspannung, das einer plastischen Verformung unterzogen wird, das einen Computer (19) veranlasst, als Folgendes zu fungieren:

eine Verformungsverlauf erfassende Einheit (25), eine Einheit zur sequentiellen Spannungsaktualisierung (27) und eine Restspannungsverteilung berechnende Einheit (29),

wobei die Verformungsverlauf erfassende Einheit einschließt:

eine Oberflächenverformungsverlauf erfassende Einheit (25a), die ausgebildet ist, als einen Verformungsverlauf auf einer Oberfläche vom Beginn bis zum Ende der Verformung eines verformbaren Bereichs dreidimensionale Koordinaten zu erfassen, die in einem Verformungsprozess gemessen werden, bei dem das Metallblech plastisch verformt wird, wobei die dreidimensionalen Koordinaten für eine Vielzahl von Messpunkten gemessen werden, die an dem verformbaren Bereich des Metallblechs festgelegt werden;

eine Dehnungsverlauf erfassende Einheit (25b), die ausgebildet ist, einen Dehnungsverlauf des verformbaren Bereichs in dem Verformungsprozess aus dem erfassten Oberflächenverformungsverlauf auf der Oberfläche des verformbaren Bereichs zu erfassen; und

eine Spinverlauf erfassende Einheit (25c), die ausgebildet ist, einen Spinverlauf des verformbaren Bereichs in dem Verformungsprozess aus dem erfassten Oberflächenverformungsverlauf auf der Oberfläche des verformbaren Bereichs zu erfassen,

wobei die Einheit zur sequentiellen Spannungsaktualisierung einschließt:

eine Einheit (27a) zum Berechnen des erfassten Dehnungsinkrements, die ausgebildet ist, das erfasste Dehnungsinkrement aus dem von der Dehnungsverlauf erfassenden Einheit erfassten Dehnungsverlauf zu berechnen;

eine Einheit (27b) zum Berechnen des angenommenen Dehnungsinkrements, die ausgebildet ist, ein angenommenes Dehnungsinkrement durch Annehmen eines Verformungszustands des verformbaren Bereichs zu berechnen, wobei das angenommene Dehnungsinkrement ein Dehnungsinkrement ist, das sich von der Dehnung unterscheidet, für die der Dehnungsverlauf von der Dehnungsverlauf erfassenden Einheit erfasst wurde;

eine Einheit (27c) zum Berechnen des erfassten Spininkrements, die ausgebildet ist, ein erfasstes Spininkrement aus dem von der Spinverlauf erfassenden Einheit erfassten Spinverlauf zu berechnen;

eine Einheit (27d) zum Berechnen des Spannungsinkrements, die ausgebildet ist, das Spannungsinkrement an jedem der Messpunkte in Übereinstimmung mit einem Materialkonstitutivgesetz unter Verwendung des erfassten Dehnungsinkrements, des angenommenen Dehnungsinkrements und des erfassten Spininkrements zu berechnen; und

eine Einheit (27e) zur sequentiellen Spannungsaktualisierung, die ausgebildet ist, Spannung in einem Materialkoordinatensystem jedes der Messpunkte vom Beginn bis zum Ende der Verformung in dem Verformungsprozess unter Verwendung des für jeden der Messpunkte berechneten Spannungsinkrements sequentiell zu aktualisieren, und

wobei die Restspannungsverteilung berechnende Einheit einschließt:

eine Spannungskoordinatensystemumwandlungseinheit (29a), die ausgebildet ist, die Spannung in dem Materialkoordinatensystem jedes der Messpunkte am Ende der Verformung in dem Verformungsprozess, die durch sequentielle Aktualisierung durch die Einheit zur sequentiellen Spannungsaktualisierung erhalten wird, in einen globalen Spannungswert in einer vorgegebenen Richtung in einem globalen Koordinatensystem umzuwandeln und den umgewandelten globalen Spannungswert jedes der Messpunkte als eine Restspannungsverteilung des verformbaren Bereichs zu erhalten,

wobei der Begriff Spin so zu verstehen ist, dass er eine Rotation eines Materialkoordinatensystems des Metallblechs an einer Position des Metallblechs bedeutet.

10. Berechnungsprogramm der Restspannungsverteilung nach Anspruch 9, wobei die Restspannungsverteilung berechnende Einheit weiter eine Restspannungsverteilunganzeigeeinheit (29b) einschließt, die ausgebildet ist, die Restspannungsverteilung des verformbaren Bereichs, die von der Spannungskoordinatensystemumwandlungseinheit erhalten wird, anzuzeigen.

11. Berechnungsprogramm der Restspannungsverteilung nach Anspruch 9 oder 10, wobei die Einheit zum Berechnen des angenommenen Dehnungsinkrements ausgebildet ist, einen Verformungszustand aus dem Verformungsprozess des verformbaren Bereichs anzunehmen und das angenommene Dehnungsinkrement basierend auf Plastizitätsmechanik in dem Verformungszustand, der angenommen wird, zu berechnen.

12. Berechnungsprogramm der Restspannungsverteilung nach Anspruch 9 oder 10, wobei die Einheit zum Berechnen des angenommenen Dehnungsinkrements ausgebildet ist, einen Verformungszustand des verformbaren Bereichs durch eine Finite-Elemente-Analyse des Verformungsprozesses des Metallblechs anzunehmen und das angenommene Dehnungsinkrement basierend auf dem Verformungszustand, der angenommen wird, zu berechnen.

**Revendications**

1. Procédé de calcul d'une répartition de contrainte résiduelle pour calculer une répartition de contrainte résiduelle générée dans une tôle (31) soumise à une déformation plastique, le procédé de calcul comprenant :

une étape d'acquisition d'historique de déformation ;

une étape de mise à jour séquentielle de contrainte ; et
une étape de calcul de la répartition de contrainte résiduelle,
dans lequel l'étape d'acquisition d'historique de déformation inclut :

une étape d'acquisition d'historique de déformation de surface consistant à définir une pluralité de points de mesure sur une surface d'une portion déformable de la tôle et à mesurer des coordonnées tridimensionnelles de chacun des points de mesure dans un processus de déformation consistant à déformer plastiquement la tôle afin d'acquérir un historique de déformation sur la surface du début à la fin d'une déformation de la portion déformable ;

une étape d'acquisition d'historique de tension consistant à acquérir un historique de tension de la portion déformable dans le processus de déformation à partir de l'historique de déformation acquis sur la surface de la portion déformable ; et

une étape d'acquisition d'historique de spin consistant à acquérir un historique de spin de la portion déformable dans le processus de déformation à partir de l'historique de déformation acquis sur la surface de la portion déformable,
l'étape de mise à jour séquentielle de contrainte inclut :

une étape de calcul de tension incrémentielle acquise consistant à calculer la tension incrémentielle acquise à partir de l'historique de tension acquis lors de l'étape d'acquisition d'historique de tension ;

une étape de calcul de tension incrémentielle présumée consistant à calculer une tension incrémentielle présumée en supposant un état de déformation de la portion déformable, la tension incrémentielle présumée étant un incrément de tension autre que la tension pour laquelle l'historique de tension a été acquis lors de l'étape d'acquisition d'historique de tension ;

une étape de calcul de spin incrémentiel acquis consistant à calculer un spin incrémentiel acquis à partir de l'historique de spin acquis lors de l'étape d'acquisition d'historique de spin ;

une étape de calcul de contrainte incrémentielle consistant à calculer une contrainte incrémentielle à chacun des points de mesure conformément à une loi constitutive du matériau en utilisant la tension incrémentielle acquise, la tension incrémentielle présumée et le spin incrémentiel acquis ; et

une étape de mise à jour séquentielle de contrainte consistant à mettre à jour séquentiellement la contrainte dans un système de coordonnées matériel de chacun des points de mesure du début à la fin de la déformation dans le processus de déformation en utilisant la contrainte incrémentielle calculé pour chacun des points de mesure, et

l'étape de calcul de répartition de contrainte résiduelle inclut :
une étape de conversion de système de coordonnées de contrainte consistant à convertir la contrainte dans le système de coordonnées matériel de chacun des points de mesure à la fin de la déformation dans le processus de déformation obtenue par la mise à jour séquentielle lors de l'étape de mise à jour séquentielle de contrainte en une valeur de contrainte globale dans une direction prédéterminée dans un système de coordonnées global et à obtenir la valeur de contrainte globale convertie de chacun des points de mesure en tant que répartition de contrainte résiduelle de la portion déformable,
dans lequel le terme spin doit être compris comme signifiant une rotation d'un système de coordonnées matériel de la tôle à une position de la tôle.

2. Procédé de calcul de la répartition de contrainte résiduelle selon la revendication 1, dans lequel l'étape de calcul de répartition de contrainte résiduelle inclut en outre une étape d'affichage de répartition de contrainte résiduelle consistant à afficher la répartition de contrainte résiduelle de la portion déformable obtenue lors de l'étape de conversion de système de coordonnées de contrainte.

3. Procédé de calcul de la répartition de contrainte résiduelle selon la revendication 1 ou revendication 2, dans lequel l'étape de calcul de tension incrémentielle présumée suppose un état de déformation provenant du processus de déformation de la portion déformable et calcule la tension incrémentielle présumée sur la base de la mécanique de la plasticité dans l'état de déformation qui est supposé.

4. Procédé de calcul de la répartition de contrainte résiduelle selon la revendication 1 ou revendication 2, dans lequel l'étape de calcul de tension incrémentielle présumée suppose un état de déformation de la portion déformable par une analyse par éléments finis du processus de déformation de la tôle et calcule la tension incrémentielle présumée sur la base de l'état de déformation qui est supposé.

5. Dispositif de calcul (19) d'une répartition de contrainte résiduelle pour calculer une répartition de contrainte résiduelle générée dans une tôle (31) soumise à une déformation plastique, le dispositif de calcul comprenant :

une unité d'acquisition d'historique de déformation (25) ;
une unité de mise à jour séquentielle de contrainte (27) ; et
une unité de calcul de répartition de contrainte résiduelle (29),
dans lequel l'unité d'acquisition d'historique de déformation inclut :

une unité d'acquisition d'historique de déformation de surface (25a) configurée pour acquérir, en tant qu'historique de déformation sur une surface du début à la fin d'une déformation d'une portion déformable, des coordonnées tridimensionnelles mesurées dans un processus de déformation consistant à déformer plastiquement la tôle, les coordonnées tridimensionnelles étant mesurées pour une pluralité de points de mesure définis sur la portion déformable de la tôle ;
une unité d'acquisition d'historique de tension (25b) configurée pour acquérir un historique de tension de la portion déformable dans le processus de déformation à partir de l'historique de déformation acquis sur la surface de la portion déformable ; et
une unité d'acquisition d'historique de spin (25c) configurée pour acquérir un historique de spin de la portion déformable dans le processus de déformation à partir de l'historique de déformation acquis sur la surface de la portion déformable,

l'unité de mise à jour séquentielle de contrainte inclut :

une unité de calcul de tension incrémentielle acquise (27a) configurée pour calculer la tension incrémentielle acquise à partir de l'historique de tension acquis par l'unité d'acquisition d'historique de tension ;
une unité de calcul de tension incrémentielle présumée (27b) configurée pour calculer une tension incrémentielle présumée en supposant un état de déformation de la portion déformable, la tension incrémentielle présumée étant un incrément de tension autre que la tension pour laquelle l'historique de tension a été acquis par l'unité d'acquisition d'historique de tension ;
une unité de calcul de spin incrémentiel acquis (27c) configurée pour calculer un spin incrémentiel acquis à partir de l'historique de spin acquis par l'unité d'acquisition d'historique de spin ;
une unité de calcul de contrainte incrémentielle (27d) configurée pour calculer une contrainte incrémentielle à chacun des points de mesure conformément à une loi constitutive du matériau en utilisant la tension incrémentielle acquise, la tension incrémentielle présumée et le spin incrémentiel acquis ; et
une unité de mise à jour séquentielle de contrainte (27e) configurée pour mettre à jour séquentiellement la contrainte dans un système de coordonnées matériel de chacun des points de mesure du début à la fin de la déformation dans le processus de déformation en utilisant la contrainte incrémentielle calculé pour chacun des points de mesure, et

l'unité de calcul de répartition de contrainte résiduelle inclut :

une unité de conversion de système de coordonnées de contrainte (29a) configurée pour convertir la contrainte dans le système de coordonnées matériel de chacun des points de mesure à la fin de la déformation dans le processus de déformation obtenue par la mise à jour séquentielle par l'unité de mise à jour séquentielle de contrainte en une valeur de contrainte globale dans une direction prédéterminée dans un système de coordonnées global et obtenir la valeur de contrainte globale convertie de chacun des points de mesure en tant que répartition de contrainte résiduelle de la portion déformable,
dans lequel le terme spin doit être compris comme signifiant une rotation d'un système de coordonnées matériel de la tôle à une position de la tôle.

6. Dispositif de calcul de la répartition de contrainte résiduelle selon la revendication 5, dans lequel l'unité de calcul de répartition de contrainte résiduelle inclut en outre une unité d'affichage de répartition de contrainte résiduelle (29b) configurée pour afficher la répartition de contrainte résiduelle de la portion déformable obtenue par l'unité de conversion de système de coordonnées de contrainte.

7. Dispositif de calcul de la répartition de contrainte résiduelle selon la revendication 5 ou revendication 6, dans lequel l'unité de calcul de tension incrémentielle présumée est configurée pour supposer un état de déformation provenant du processus de déformation de la portion déformable et calculer la tension incrémentielle présumée sur la base de la mécanique de la plasticité dans l'état de déformation qui est supposé.

8. Dispositif de calcul de la répartition de contrainte résiduelle selon la revendication 5 ou revendication 6, dans lequel l'unité de calcul de tension incrémentielle présumée est configurée pour supposer un état de déformation de la portion déformable par une analyse par éléments finis du processus de déformation de la tôle et calculer la tension incrémentielle présumée sur la base de l'état de déformation qui est supposé.

9. Programme de calcul d'une répartition de contrainte résiduelle pour calculer une répartition de contrainte résiduelle générée dans une tôle (31) soumise à une déformation plastique, le programme de calcul amenant un ordinateur (19) à fonctionner comme :

une unité d'acquisition d'historique de déformation (25), une unité de mise à jour séquentielle de contrainte (27) et une unité de calcul de répartition de contrainte résiduelle (29),
dans lequel l'unité d'acquisition d'historique de déformation inclut :

une unité d'acquisition d'historique de déformation de surface (25a) configurée pour acquérir, en tant qu'historique de déformation sur une surface du début à la fin d'une déformation d'une portion déformable, des coordonnées tridimensionnelles mesurées dans un processus de déformation consistant à déformer plastiquement la tôle, les coordonnées tridimensionnelles étant mesurées pour une pluralité de points de mesure définis sur la portion déformable de la tôle ;
une unité d'acquisition d'historique de tension (25b) configurée pour acquérir un historique de tension de la portion déformable dans le processus de déformation à partir de l'historique de déformation acquis sur la surface de la portion déformable ; et
une unité d'acquisition d'historique de spin (25c) configurée pour acquérir un historique de spin de la portion déformable dans le processus de déformation à partir de l'historique de déformation acquis sur la surface de la portion déformable,

l'unité de mise à jour séquentielle de contrainte inclut :

une unité de calcul de tension incrémentielle acquise (27a) configurée pour calculer la tension incrémentielle acquise à partir de l'historique de tension acquis par l'unité d'acquisition d'historique de tension ;
une unité de calcul de tension incrémentielle présumée (27b) configurée pour calculer une tension incrémentielle présumée en supposant un état de déformation de la portion déformable, la tension incrémentielle présumée étant un incrément de tension autre que la tension pour laquelle l'historique de tension a été acquis par l'unité d'acquisition d'historique de tension ;
une unité de calcul de spin incrémentiel acquis (27c) configurée pour calculer un spin incrémentiel acquis à partir de l'historique de spin acquis par l'unité d'acquisition d'historique de spin ;
une unité de calcul de contrainte incrémentielle (27d) configurée pour calculer une contrainte incrémentielle à chacun des points de mesure conformément à une loi constitutive du matériau en utilisant la tension incrémentielle acquise, la tension incrémentielle présumée et le spin incrémentiel acquis ; et
une unité de mise à jour séquentielle de contrainte (27e) configurée pour mettre à jour séquentiellement la contrainte dans un système de coordonnées matériel de chacun des points de mesure du début à la fin de la déformation dans le processus de déformation en utilisant la contrainte incrémentielle calculé pour chacun des points de mesure, et

l'unité de calcul de répartition de contrainte résiduelle inclut :

une unité de conversion de système de coordonnées de contrainte (29a) configurée pour convertir la contrainte dans le système de coordonnées matériel de chacun des points de mesure à la fin de la déformation dans le processus de déformation obtenue par la mise à jour séquentielle par l'unité de mise à jour séquentielle de contrainte en une valeur de contrainte globale dans une direction prédéterminée dans un système de coordonnées global et obtenir la valeur de contrainte globale convertie de chacun des points de mesure en tant que répartition de contrainte résiduelle de la portion déformable,
dans lequel le terme spin doit être compris comme signifiant une rotation d'un système de coordonnées matériel de la tôle à une position de la tôle.

10. Programme de calcul de la répartition de contrainte résiduelle selon la revendication 9, dans lequel l'unité de calcul de répartition de contrainte résiduelle inclut en outre une unité d'affichage de répartition de contrainte résiduelle (29b) configurée pour afficher la répartition de contrainte résiduelle de la portion déformable obtenue par l'unité de conversion de système de coordonnées de contrainte.

**11.** Programme de calcul de la répartition de contrainte résiduelle selon la revendication 9 ou revendication 10, dans lequel l'unité de calcul de tension incrémentielle présumée est configurée pour supposer un état de déformation provenant du processus de déformation de la portion déformable et calculer la tension incrémentielle présumée sur la base de la mécanique de la plasticité dans l'état de déformation qui est supposé.

**12.** Programme de calcul de la répartition de contrainte résiduelle selon la revendication 9 ou revendication 10, dans lequel l'unité de calcul de tension incrémentielle présumée est configurée pour supposer un état de déformation de la portion déformable par une analyse par éléments finis du processus de déformation de la tôle et calculer la tension incrémentielle présumée sur la base de l'état de déformation qui est supposé.

# FIG.1

START

DEFORMATION HISTORY ACQUIRING STEP — S10

SURFACE DEFORMATION HISTORY ACQUIRING STEP — S11

STRAIN HISTORY ACQUIRING STEP — S13

SPIN HISTORY ACQUIRING STEP — S15

SEQUENTIAL STRESS UPDATING STEP — S20

ACQUIRED INCREMENTAL STRAIN CALCULATING STEP — S21

ASSUMPTIVE INCREMENTAL STRAIN CALCULATING STEP — S23

ACQUIRED INCREMENTAL SPIN CALCULATING STEP — S25

INCREMENTAL STRESS CALCULATING STEP — S27

SEQUENTIAL STRESS UPDATING STEP — S29

UPDATE LOCAL STRESS — S29a

UPDATE OF STRESS FOR ALL MEASUREMENT POINTS FINISHED? — S29b

NO

YES

DEFORMATION FINISHED? — S29c

NO

YES

RESIDUAL STRESS DISTRIBUTION CALCULATING STEP — S30

STRESS COORDINATE SYSTEM CONVERTING STEP — S31

RESIDUAL STRESS DISTRIBUTION DISPLAY STEP — S33

END

# FIG.2

31

(a) BEFORE DEFOR-MATION

y

⤴

→ x

GLOBAL COORDINATE SYSTEM

MATERIAL COORDINATE SYSTEM

31

33

(b) AFTER DEFOR-MATION

y

⤴

→ x

GLOBAL COORDINATE SYSTEM

MATERIAL COORDINATE SYSTEM

# FIG.3

# FIG.4

(a) BEFORE DEFORMATION　　　　(b) AFTER DEFORMATION

# FIG.5

# FIG.6

# FIG.7

# FIG.8

# FIG.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002333409 A
- JP 2011196953 A
- JP 6981521 B
- WO 2022123825 A1

**Non-patent literature cited in the description**

- **F. YOSHIDA** ; **T. UEMORI**. *International Journal of Mechanical Sciences*, 2003, vol. 45, 1687-1702